# EUROPÄISCHE PATENTSCHRIFT

(11) **EP 1 978 856 B1**
(45) Veröffentlichungstag und Bekanntmachung des Hinweises auf die Patenterteilung: **16.09.2015**
(21) Anmeldenummer: 07712033.5
(22) Anmeldetag: 15.01.2007
(51) Int. Cl.: A47J 42/52, A23N 12/12

(54) **HAUSHALTSKAFFEERÖSTER**
HOUSEHOLD COFFEE ROASTER
TORREFACTEUR A CAFE DOMESTIQUE

(30) Priorität: 16.01.2006 DE 102006002048
(43) Veröffentlichungstag der Anmeldung: 15.10.2008
(73) Patentinhaber: BSH Hausgeräte GmbH, 81739 München (DE)
(72) Erfinder: BROSSMANN, Anna, 26121 Oldenburg (DE); NÜSSLER, Gerhard, 80798 München (DE)
(86) Internationale Anmeldenummer: PCT/EP2007/050328
(87) Internationale Veröffentlichungsnummer: WO 2007/082857

(56) Entgegenhaltungen:
- DE-A1- 10 142 297
- DE-C1- 19 902 786
- US-A1- 2003 127 455

## Beschreibung

Die Erfindung betrifft einen Haushaltskaffeeröster der ein Dampfröster mit einer Röstkammer ist.

Heimröster für Kaffee arbeiten bis heute nur mit Trommel- oder Heißluftverfahren. Bei der industriellen Röstung werden außerdem Röster mit Dampf eingesetzt.

Beim Rösten mit Heißluftverfahren wird der Kaffee in einem Heißluftstrahl geröstet. Hierbei sind die Bohnen ständig in Bewegung, womit eine gleichmäßige Röstung bei optimaler Wärmeentwicklung gewährleistet ist. Nach Ende des Röstvorgangs wird der Kaffee aus dem Röster in ca. zwei Sekunden gleichmäßig auf ein ringförmiges Kühlsieb gebracht. Der Kühlvorgang dauert etwa zweieinhalb Minuten. Die Röstzeit dieses Verfahrens dauert insgesamt fünf bis sieben Minuten pro Röstvorgang von 150 kg Rohkaffee bei einer Rösthitze von 560° C.

Bei der so genannten High Yield-Röstung, einem weiteren Verfahren bei der industriellen Herstellung von Kaffee, verkürzt sich die Röstdauer erheblich. Hier wird noch mehr Heißluft eingesetzt, die Temperatur jedoch etwas heruntergesetzt. Dieses Röstverfahren dauert nur ein bis drei Minuten.

Bei Trommelröstung, die in kleinen und mittleren Röstereien verwendet wird, wird kalter Rohkaffee in eine auf ca. 200° C vorgeheizte Trommel eingefüllt, deren Temperatur 180° C aufweist. Diese Temperatur wird ungefähr sechs Minuten nach Einlass erreicht. Sie führt zum Aufknacken der Bohnen, dem so genannten "crack". Dabei vergrößern sich die Bohnen um etwa ein Viertel ihres Volumens. Nun erfolgt bei gleichbleibenden Wärmeverhältnissen die Phase des "Entfaltens", also der Ausdehnung der Bohnen. Diese dauert ca. zwei Minuten. Wenn der richtige Grad der Röstung erreicht ist, wird das nun braun gefärbte Röstgut nach einer Gesamtzeit von 12 bis 15 Minuten aus der Trommel gelassen und so rasch wie möglich abgekühlt, damit sich die Poren der Bohne schnell schließen und das volle Aroma erhalten bleibt. Verlängert man die Entwicklungsphase nach dem Aufknacken der Bohnen, so wird das Kerninnere besser durchröstet. Reduziert man die Temperatur auf ca. 160° C, verlängert sich der Röstvorgang um ca. drei Minuten.

Diese Verfahren bzw. dafür ausgelegte Röster sind mit vielen Nachteilen verbunden. Beispielsweise sind die Geräte recht laut, so dass das Knacken der Bohnen, das ausschlaggebend für das Erkennen des Röststadiums ist, kaum zu hören ist. Ein weiterer Nachteil liegt darin, dass bei der Kaffeeröstung nicht deutlich ist, in welchem Stadium der Röstung oder Kühlung sich der Apparat befindet.

Die DE 101 42 297 offenbart ein Verfahren und eine Vorrichtung zum Rösten von Pflanzentellen, insbesondere Kaffeebohnen, wobei eine Aufnahmeeinrichtung der Vorrichtung insbesondere eine Trommel, mit zumindest einem Durchbruch versehen ist um einen verbesserten Zutritt von z. B. Dampf als Wärme- und/oder Feuchtigkeitsträger in den Trommelinnenraum zu ermöglichen und damit die Quantität der Röstung bzw. Endröstung weiter zu heben. Diese Durchbrüche können gleichzeitig für die Durchwirbelung der Pflanzenteile während des Röstyorganges, z. B. zum Aufbau einer Art Wirbelnschicht herangezogen

### wenden.

Es ist die Aufgabe der vorliegenden Erfindung, eine Möglichkeit für eine Zubereitung von Kaffeegetränken im Haushalt mit verbessertem Aroma bereitzustellen.

Diese Aufgabe wird durch einen Haushaltskaffeeröster nach Anspruch 1 gelöst. Vorteilhafte Ausgestaltungen sind Gegenstand von abhängigen Ansprüchen.

Der Haushaltskaffeeröster ist dazu als ein Dampfröster ausgestaltet.

Bevorzugt wird ein Dampfröster der als ein Wirbelschichtröster ausgestaltet ist, welcher mit Dampf arbeitet. Bei der Wirbelschichtröstung werden Bohnen von Rohkaffee als Röstgut in einem Wirbelbett eines Röstreaktors bzw. einer Röstkammer geröstet. Dieses Wirbelbett entsteht durch eine Heißluft-Wasserdampf-Atmosphäre, in der die Bohnen schwebend geröstet werden. Nachdem verschiedene Rohkaffees zu einer Röstmasse gemischt wurden, kommen die Bohnen in den Röstreaktor. Dort strömt von unten die Heißluft-Wasserdampf-Atmosphäre hinein. Dadurch wird der Kaffee angehoben und erwärmt. Sobald der Kaffee fertig geröstet ist, werden die heißen Bohnen abgekühlt. Dazu kommen die Bohnen vorzugsweise in einen zweiten Wirbelschichtreaktor, in dem die heißen Bohnen mit Umgebungsluft abgekühlt werden.

Durch eine solche Wirbelschichtröstung sind verschiedene Vorteile erzielbar. Durch das schonende Rösten mit Wasserdampf bildet sich das gewünschte Aroma in der Kaffeebohne. Dieses Verfahren bietet eine konstante und hohe Qualität der Röstung der Kaffeebohnen. Durch das Verwirbeln der Bohnen in der Röstkammer werden sie von allen Seiten mit gleicher Qualität geröstet. Gegenüber dem Trommelrösten hat die Wirbelschichtröstung eine stark verkürzte Röstdauer, die Dauer gegenüber Heißluft ist ungefähr dieselbe. Bei Heißluft besteht aber der Nachteil, dass die Bohnen austrocknen und bitter werden, was durch die Wirbelschichtröstung verhindert wird, da sie feucht und schonend röstet. Weiter mindert die Röstung im Wirbelschichtverfahren einen unangenehmen Geruch, der beim Kaffeerösten auftritt. Außerdem bietet dieses Verfahren die Möglichkeit, mit karamellisiertem Zucker überzogene Kaffeebohnen herzustellen. Die Zuckerschicht gibt der Kaffeebohne ein besonders intensives Aroma. Durch die Verwendung von Wasserdampf ist zudem eine Brandgefahr in der Röstkammer ausgeschlossen.

Ein solches Dampfröstgerät umfasst mindestens eine Röstkammer, vorzugsweise einen Wasserspeicher, einen Dampfkessel, eine Auffangschale und eine Steuerelektronik.

Erfindungsgemäß umfasst der Dampfröster ein Gehäuse, in welchem zusätzlich zu einer Röstkammer eine Kaffeemühle angeordnet ist. Alternativ oder auch zusätzlich ist es aber auch vorteilhaft, wenn der Dampfröster eine Röstkammer aufweist, welche aus einem Gehäuse herausnehmbar ist und unterseitig zum Aufsetzen auf eine Kaffeemühle ausgebildet ist.

Eine Röstkammer weist bevorzugt einen verstellbaren Bodendeckel auf, der ausgestaltet ist zum Öffnen in einen geöffneten Zustand des Bodendeckels zum Einfüllen und/oder Ausgeben von Bohnen und der schließbar ausgestaltet ist in einen geschlossenen Zustand des Bodendeckels zum Beibehalten von Bohnen in der Röstkammer. Der Bodendeckel ist bevorzugt schwerkraft-betätigbar ausgebildet zum Öffnen des Bodendeckels bei einer Stellung mit dem Bodendeckel oberhalb der Röstkammer und zum Schließen des Bodendeckels bei einer Stellung des Bodendeckels unterhalb der Röstkammer. Der Bodendeckel kann vorteilhaft durch Aufsetzen auf ein Entleerungsbehältnis oder auf eine Mühle verstellbar ausgestaltet sein, zum Öffnen und Herausfallenlassen von Bohnen aus der Röstkammer.

Die Röstkammer weist bevorzugt eine Röstkammerwandung auf, welche einen teilkreisförmigen Schnitt aufweist und längs einer teilkreisfömigen Bahn seitlich und/oder hinter einen Röstzylinder verstellbar ist zum Freigeben eines Innenraums der Röstkammer zum Einsetzen und Entnehmen des Röstzylinders.

Durch einen verschwenkbar angeordneten Deckel an einem Wasserspeicher und/oder einer Röstkammer zum Einfüllen von Wasser bzw. Bohnen ist ein einfaches Befüllen und Verschließen möglich. Durch einen seitlich verschiebbar angeordneten Deckel an einem Wasserspeicher und/oder einer Röstkammer zum Einfüllen von Wasser bzw. Bohnen ist ebenfalls ein einfaches Befüllen und Verschließen möglich.

Oberseitig einer Röstkammer ist bevorzugt ein Deckel angeordnet, welcher zum Einsetzen und/oder Entnehmen eines Röstzylinders entfernbar, insbesondere abnehmbar oder verschwenkbar ist. Alternativ ist der Röstzylinder durch eine vorderseitig verschließbare Öffnung entnehmbar.

Eine Auffangschale wird bei einer solchen Anordnung bevorzugt, wobei die Auffangschale unterhalb einer Röstkammer zum Aufnehmen von zumindest Spelzen der Bohnen und / oder Kondenswasser während des Röstvorgangs ausgebildet und angeordnet ist.

Die Röstkammer ist bevorzugt in einem mittleren Abschnitt angeordnet, wobei auf einer Seite seitlich davon ein Wasserspeicher angeordnet ist und auf der anderen Seite der Röstkammer, dem Wasserspeicher gegenüberliegend, ein Dampfkessel angeordnet ist.

Bedien- und/oder Anzeigeelemente sind bevorzugt in einem Gehäuseabschnitt ohne Röstkammer und ohne Wasserspeicher angeordnet, in welchem ein Dampfkessel angeordnet ist. Dadurch werden Bedienelemente und eine diesem zugeordnete Elektronik in einem Gehäusebereich angeordnet, in welchem sich kein freies Wasser oder freier Wasserdampf befinden.

Vorteilhaft wird ein solcher Dampfröster durch eine Elektronik zum Ansteuern verschiedener Betriebsprogramme zum Rösten und/oder Mahlen von Bohnen gesteuert.

Durch eine Waage zum Wiegen von in die Röstkammer eingefüllten Bohnen, wobei die Waage einen Gewichtswert bevorzugt an eine Elektronik zum Steuern des Röstbetriebs leitet, kann eine Verbesserung der entsprechend auf das Gewicht abstimmbaren Röstbedingungen erzielt werden.

Die Elektronik kann ausgelegt und/oder programmiert sein zum Durchführen eines Reinigungsprozesses, bei dem Dampf in einen Röstzylinder und/oder in eine Röstkammer geleitet wird. Wände des Röstzylinder und/oder der Röstkammer können dazu derart ausgestaltet sein, insbesondere außenseitig kühlbar ausgestaltet sein, dass zum Reinigen an den Wänden der Dampf kondensiert und herunterläuft.

Die Elektronik kann ausgelegt und/oder programmiert sein zum automatischen Durchführen einer Kühlphase zum Abkühlen der gerösteten Bohnen in einer Röstkammer nach einem Röstvorgang der Bohnen in der Röstkammer.

Eine Röstkammer und/oder ein Röstzylinder können durch eine Schaltanordnung und/oder eine Ansteuerung durch eine Elektronik ausgelegt sein, wahlweise von Dampf oder Kühlungsluft durchströmt zu werden.

Eine geeignete Wahl von Materialien für den Aufbau eines solchen Dampfrösters ergibt weitere Vorteile. Wichtig, aber nicht zwingend notwendig, bei der Auswahl der Materialien ist unter anderem, dass zwischen den Elementen, die bewegt werden, eine Einheit entsteht. Außerdem sollte eine flüssige Anzeigefunktion entstehen. Weiter ist wichtig, dass die Materialien sinnvoll eingesetzt werden, wie zum Beispiel, dass eine Edelstahlwanne in der Röstkammer und ein Kunststoff einer Rückwand eine isolierende Funktion übernehmen.

Weitere wichtige, aber nicht zwingend notwendige, Punkte bei der Wahl der Materialien sind, dass eine Form herstellbar ist, dass wenig Kosten verursacht werden, dass Bezug zum Kaffee hergestellt wird, dass die Anordnung ansprechend ist und dass so Spaß am Betrieb des Gerätes bewirkt wird. Die Bedienung sollte eindeutig sein, die Anzeigefunktion ausgeprägt sein. Dennoch sollte das Gerät detailfreudig sein und eine hochwertige Haptik aufweisen.

Ein Ausführungsbeispiel wird nachfolgend mit verschiedenen Ausführungsformen anhand der Zeichnungen näher erläutert. Gleiche Bezugszeichen verweisen zur besseren Übersichtlichkeit auf zueinander gleiche oder gleich wirkende Komponenten und Funktionen. Bezüglich solcher Komponenten und Funktionen wird hinsichtlich der Beschreibung auch auf die Ausführungen zu weiteren Ausführungsformen und Figuren verwiesen. Es zeigen schematisch:
- FIG 1: eine beispielhafte Anordnung von Hauptkomponenten eines Haushalts-Kaffeedampfrösters einer ersten Ausführungsform,
- FIG 2: eine weitere Anordnung eines Haushalts-Kaffeedampfrösters,
- FIG 3: eine weitere Anordnung eines Haushalts-Kaffeedampfrösters mit zusätzlich einer Kaffeemühle in zwei perspektivischen Ansichten,
- FIG 4: eine weitere Anordnung eines Haushalts-Kaffeedampfrösters,
- FIG 5: eine rückseitige Ansicht der Anordnung gemäß FIG 1,
- FIG 6 - 10: weitere Anordnungen eines Haushalts-Kaffeedampfrösters mit zugeordneter Kaffeemühle,
- FIG 11: eine Vielzahl von Anordnungen mit einem gemeinsamen Gehäuse eines Haushalts-Kaffeedampfrösters, in welchem ein Dampfröster und eine Kaffeemühle integriert sind,
- FIG. 12: eine seitliche Schnittansicht und eine seitliche perspektivische Ansicht eines Bodens einer Röstkammer,
- FIG 13: Draufsichten auf Anordnungen einer Röstkammer, welche durch seitliches Verschieben zwischen einem Röstbereich und einem Mühlenbereich verstellbar ist,
- FIG 14: seitliche Teilschnittansichten einer Röstkammer in verschiedenen Ausrichtungen mit einem Boden mit einer weiteren Ein- und Auslassöffnung für Kaffeebohnen,
- FIG 15: in Draufsicht eine um eine Achse verschwenkbare Röstkammer,
- FIG 16 - 20: Draufsichten auf verschiedene Anordnungen eines Haushalts-Kaffeedampfrösters,
- FIG 21 - 26: verschiedene klapp- oder verschiebbare Ausgestaltungen von Öffnungen für einen Wassertank oder eine Röstkammer,
- FIG 27: eine Röstkammer mit einer beispielhaften Öffnung, welche nach oben gerichtet zum Einfüllen von Bohnen und nach unten gerichtet zum Halten der Bohnen während des Röstens und zum anschließenden Auslassen der Bohnen geeignet ist,
- FIG 28 - 37: eine Vielzahl weiterer Anordnungen von Haushalts-Kaffeedampfröstern,
- FIG 38: eine Eingabe- und Anzeigeeinrichtung zum Betreiben eines Haushalts-Kaffeedampfrösters,
- FIG 39 - 42: verschiedene Ansichten eines besonders bevorzugten Haushalts-Kaffeedampfrösters,
- FIG 43, 44: seitliche Ansichten von darin angeordneten Komponenten,
- FIG 45 - 47: jeweils mehrere Ansichten eines solchen Haushalts-Kaffeedampfrösters in verschiedenen Betriebsstellungen,
- FIG 48 - 50: schematisch Komponenten innerhalb eines solchen Haushalts-Kaffeedampfrösters und
- FIG 51 - 54: den besonders bevorzugten Haushalts-Kaffeedampfröster mit Skizzierung von Luftströmungen und darin befindlichen Spelzen während verschiedener Verfahrensschritte während eines Röstvorgangs.

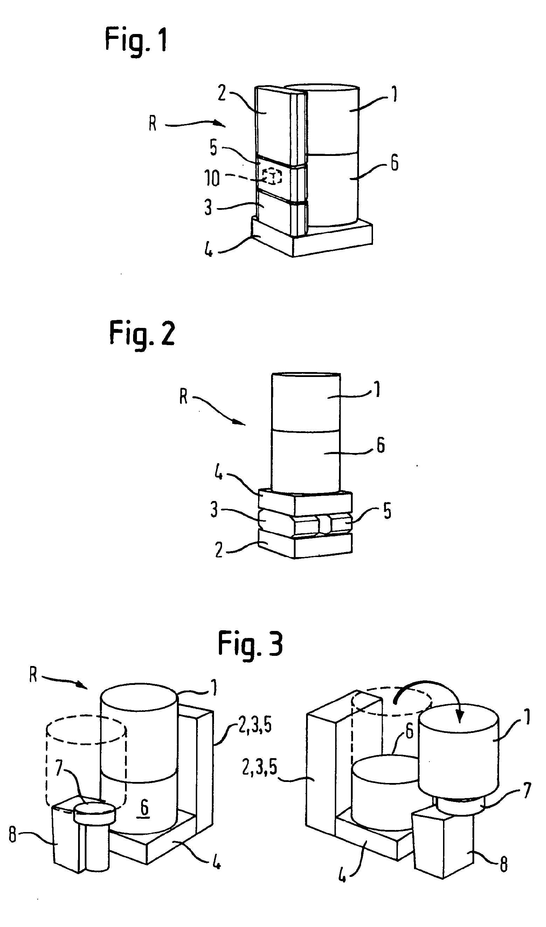

Wie aus FIG 1 ersichtlich, sind Hauptkomponenten eines Haushalts-Kaffeedampfrösters R einer ersten Ausführungsform als schematisch dargestellte Elemente des Rösters eine Röstkammer 1, ein Wasserspeicher 2, ein Dampfkessel 3, eine Auffangschale 4 zum Auffangen von Spelzen und kondensiertem Wasser, ein Bereich 5 für Pumpe und Technik und eine Elektronik 10.

Die Röstkammer 1 befindet sich in einem zylindrischen Körper, in dessen unterem Teil sich ein Bereich 6 mit Dampfdüsen befindet. In der Figur links unten befindet sich der Dampfkessel 3. Darüber liegt der Bereich 5 für Pumpe und Technik und ganz oben der Wasserspeicher 2 als Wassertank. Bezeichnend für diesen Entwurf ist, dass die Röstkammer 1 von der Technik und dem Wasser-Dampfbereich zur Erzeugung des Wasserdampfs abgetrennt ist. Nur der gemeinsame Sockel der Auffangschale 4 verbindet diese Elemente.

In dem Entwurf gemäß FIG 2 des Kaffeerösters R sind die Elemente wie ein Turm aufeinander gestellt. Die Form des Turms streckt sich in die Höhe und nimmt eine vorteilhaft geringe Grundfläche ein. Die Basis bildet der Wasserspeicher 2, darüber befinden sich der Bereich 5 mit Pumpe und der Raum für die Technik, auf der anderen Seite der Dampfkessel 3. Das nächst höhere Element ist die Auffangschale 4 für Wasser und Schalenreste. Darauf steht schließlich die Röstkammer 1 mit dem Bereich 6 für die Dampfdüsen.

In der Anordnung gemäß FIG 3 ist auf der rechten Seite eine Option für eine Verbindung der Komponenten mit zusätzlich einer Kaffeemühle 7 dargestellt. Als mögliches Erweiterungselement ist eine Kaffeemühle 7 angedacht, auf die man die Röstkammer 1 mit einem darin integrierten Röstzylinder setzen kann, wie gestrichelt skizziert. Die Röstkammer 1 kann umfasst und aus dem Bereich für die Dampfdüsen 6 herausgedreht werden. Unter der Röstkammer 1 befindet sich die Auffangschale, links neben der Röstkammer 1 der Wasserspeicher 2, ein Dampfkessel und der Bereich 5 für Pumpe und den Raum für die Technik. Unter der Röstkammer 1 auf der rechten Seite, also wenn sie umgesetzt wurde, befindet sich die Kaffeemühle 7, in der der frisch geröstete Kaffee gemahlen wird. Unter der Mühle ist ein Auffangbehälter 8, in dem der gemahlene Kaffee gesammelt wird.

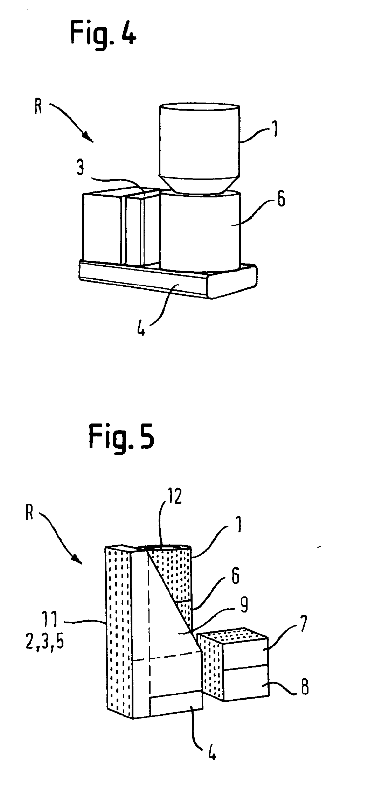

In dem Sockel des Entwurfs gemäß FIG 4 befindet sich die Auffangschale 4 für Wasser und Spelzen. Auf der linken Seite, und immer noch auf der Auffangschale 4, ist der Wasserspeicher 2, daneben der Bereich 5 mit der Pumpe und dem Raum für die Technik angeordnet. Rechts oben befindet sich die Röstkammer 1, darunter der Bereich 6 der Dampfdüsen und des Dampfkessels.

FIG 5 zeigt eine Anordnung gemäß FIG 3 in modifizierter Form aus rückseitiger Ansicht. Zum Schutz hinter der Anordnung befindlicher Gegenstände und als Führungshilfe weist diese eine Rückwand 9 auf. Die Rückwand 9 ist vorzugsweise aus einem gut wärmeisolierenden bzw. schlecht wärmeleitenden Material wie Kunststoff ausgebildet.

Anhand der Skizze gemäß FIG 5 werden Überlegungen zu Materialien dargestellt. Die drei Elemente, Sockelelement 11 mit Wasserspeicher, Röstkammer 1 und Kaffeemühle 7 zeichnen sich dadurch aus, dass sie vorzugsweise umlaufend ein Aluminiumprofil aufweisen, wobei Aluminiumoberflächen beispielhaft gepunktet veranschaulicht sind. Die Wandungen an den Seitenflächen zu diesen Flächen sind z.B. aus Kunststoff und weiß skizziert. Die Röstkammer 1 wird in der am Sockelelement 11 angesetzten Stellung zumindest teilweise von diesem umschlossen.

Der zylindrische Körper der Röstkammer 1 ist vorzugsweise aus Aluminium ausgebildet, kann aber auch aus z.B. Kunststoff ausgebildet sein. Ein Deckel 12 bzw. die Oberseite der Röstkammer 1 ist durchsichtig, vorzugsweise aus Glas, ausgebildet, um einen Einblick in diese zu ermöglichen. Dadurch kann der Röstgrad der Kaffeebohnen während des Röstens an z.B. deren Bräunungsgrad beobachtet werden.

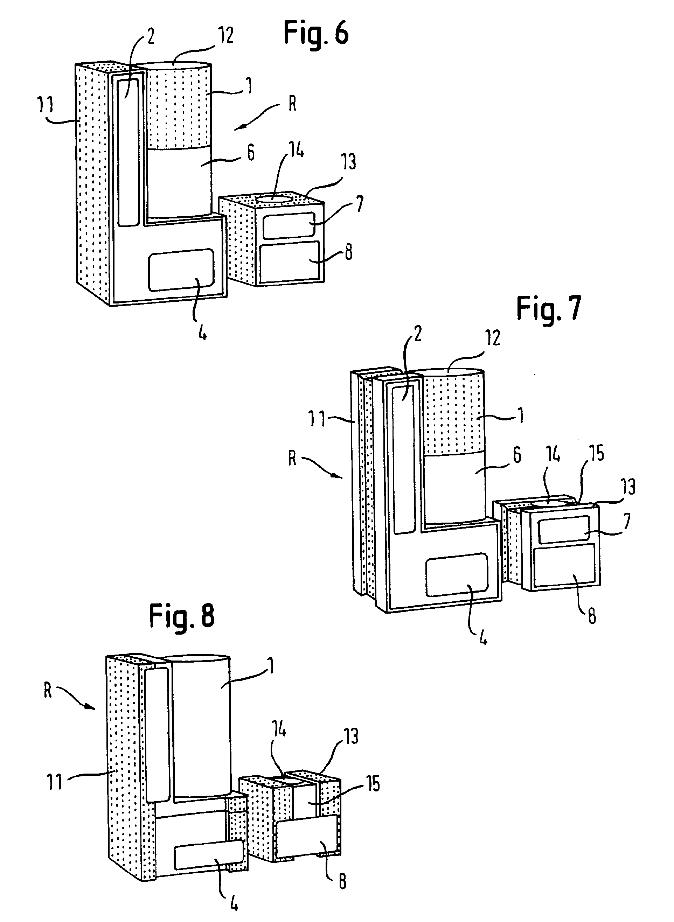

FIG 6 zeigt eine Variante gegenüber FIG 5. Die Röstkammer 1 ist dabei nicht in anderen Komponenten eingebettet. Das Sockelelement 11 weist zur einfacheren Entleerung schubfachartige Elemente auf, welche aus vorzugsweise der Vorderseite herausgezogen werden können. Dies sind insbesondere Auffangschale 4 und der Wasserspeicher 2.

Die Kaffeemühle 7 ist ebenfalls in dem Sockelelement oder alternativ, wie dargestellt, einem eigenen Gehäuse 13 aufgenommen, in welchem unter der Kaffeemühle 7 der Auffangbehälter 8 als Schubfach angeordnet ist. Dargestellt ist in dem Gehäuse 13 eine oberseitige Öffnung 14 zum Aufsetzen der Röstkammer 1, um aus dieser die gerösteten Kaffeebohnen in die Kaffeemühle 7 zu entleeren.

Gemäß FIG 7 bildet sich eine Vertiefung 15 im Kunststoffkörper insbesondere des Sockelelement 11 des Geräts, wobei die Vertiefung 15 aus Aluminium ausgebildet oder mit einem Aluminiumprofil verkleidet ist. Die Röstkammer 1 weist ein Aluminiumprofil auf und besitzt ein Sichtfenster als Deckel 12 an der oberen Seite.

Umsetzbar ist beispielsweise eine Variante zur Platzierung des Glaseinlegers als Deckel der Röstkammer 1. So kann der Deckel z.B. mit seiner Oberfläche etwas unterhalb eines oberen Rands der Röstkammer 1 eingelassen sein oder etwas nach oben hin herausstehen.

Die Front des Wasserspeichers 2, die Auffangschale 4 und die Röstkammer 1 können z.B. auch alle aus einem Material, insbesondere Aluminium ausgebildet oder damit verkleidet sein. Insbesondere kann der Wasserspeicher auch als nach oben hin abnehmbares Element ausgebildet sein, was ein leichteres Abnehmen zum Befüllen als im Fall eines Schubfachs ermöglicht.

Möglich sind auch Varianten, bei denen die abnehmbaren oder beweglichen Teile aus einem Material und die übrigen Teile aus einem anderen Material gefertigt bzw. damit verkleidet sind. Auch kann eine lediglich farblich oder oberflächenstrukturell unterschiedliche Gestaltung vorgesehen sein. Dadurch wird eine optische und/oder haptische Erkennbarkeit von bedienbaren Elementen ermöglicht. So können z.B. die Röstkammer, die Auffangschale, der Wasserspeicher und der Auffangbehälter aus Aluminium sein, während das Sockelelement 11 und das Gehäuse 13 der Kaffeemühle 7 aus Kunststoff sind. Die Röstkammer 1 kann z.B. wieder ein Sichtfenster besitzen.

FIG. 8 zeigt eine weitere Variante, bei der das Sockelelement 11 und das Gehäuse 13 der bzw. mit Kaffeemühle aus einem Material, z.B. Aluminium oder Edelstahl, ausgebildet sind. Eine umlaufende Vertiefung 15 ist bei dieser Variante von vorne nach hinten umlaufend ausgebildet und aus z.B. Kunststoff gebildet oder mit Kunststoff abgesetzt verkleidet.

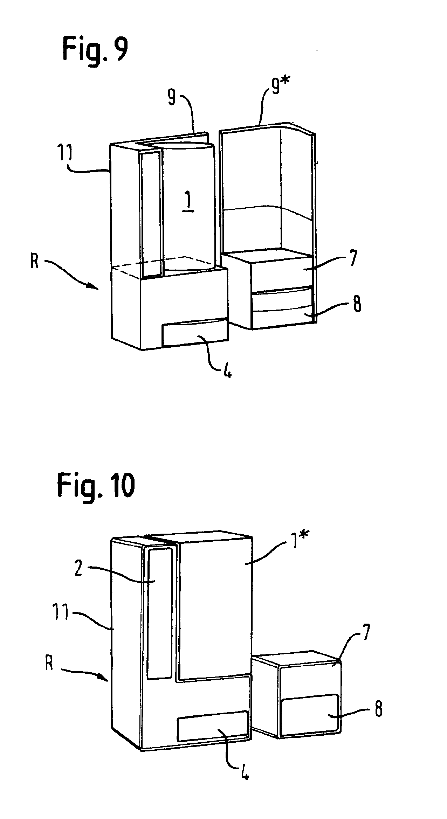

FIG 9 zeigt eine weitere Variante. Die Röstkammer 1 wird von hinten durch eine Rückwand 9 in einem Winkel umschlossen. Dadurch wird vorne und hinten der Gesamtanordnung einfach wahrnehmbar definiert. Die Rückwand 9 ist dabei wahlweise glattwandig ausgebildet oder zur aufsetzbaren Röstkammer 1 hin mit einer zu dieser hin gekrümmt verlaufenden Wandung. Die zugehörige Kaffeemühle 7 ist mit einer Rück- und Seitenwand 9* ausgerüstet, an welche die Röstkammer 1 bzw. der zugehörige Röstbehälter, ggf. mit einem Spalt, analog anlegbar bzw. einsetzbar ist.

FIG 10 zeigt eine weitere Variante. Bei dieser ist die Röstkammer 1* quadratisch, nicht zylindrisch, geformt. Soweit aus strömungstechnischen Gründen eine zylindrische Kammer zum Rösten der Kaffeebohnen bevorzugt wird, kann eine solche zylindrische Kammer als eigentliche Röstkammer in einer solchen rechteckigen Verkleidung aufgenommen sein. Ein Nachteil hierbei liegt in dem Einsetzen und der Entnahme des Wasserspeichers 2. Da dieser oben links platziert ist, ist er nicht so gut zu erreichen. Die Röstkammer 1 muss dazu ggfs. komplett abgenommen werden, was wegen des Durchmessers der Röstkammer 1 unangenehm sein kann. Außerdem bleibt durch die Komplettentnahme des Röstzylinders oder der Röstkammer 1 die Grundform hinsichtlich eines bevorzugten Designs nicht erhalten.

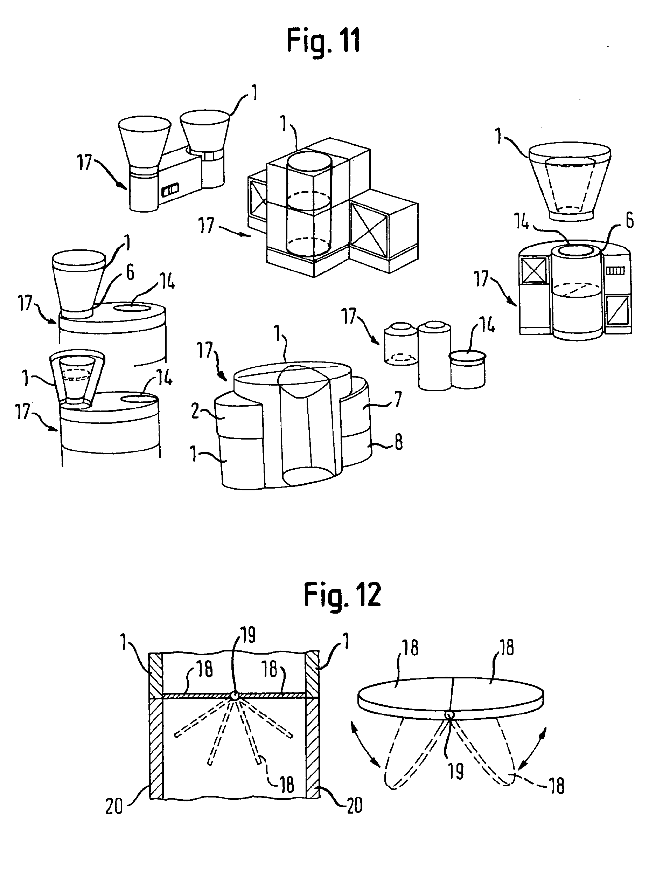

FIG 11 zeigt weitere Varianten. Bei diesen ist eine Trennung in ein getrenntes Gehäuse für das Sockelelement und den Röstabschnitt und das Gehäuse 13 der Kaffeemühle aufgehoben und anstelle dessen ein gemeinsames Gehäuse 17 ausgebildet, in welchem sämtliche Komponenten für das Rösten und das anschließende Mahlen aufgenommen sind. Zwar ist dafür ein größerer Stellplatz erforderlich als bei einzelnen Komponenten für sich genommen, jedoch nimmt ein einziges gemeinsames Gehäuse 17 insgesamt weniger Platz in Anspruch als getrennte Gehäuse. Dies ist vorliegend vorzuziehen, da Kaffeebohnen zweckmäßigerweise nicht auf Vorrat geröstet werden sondern nach Bedarf geröstet und direkt gemahlen werden, um Kaffee aufzubrühen.

Die Röstkammer 1 weist gemäß FIG 12 in zwei Ansichten skizziert einen bevorzugten Röstkammerboden 18 auf, der klappbar ausgebildet ist. Zwei Flügel sind um eine Achse 19 schwenkbar gelagert. Zu Beginn werden bei geschlossenem Röstkammerboden 18 die grünen Bohnen in die Röstkammer 1 gegeben. Nach dem Rösten klappt der Boden der Röstkammer 1 mittig nach unten zusammen und die Bohnen fallen nach unten in eine Auffangschale 20. Bevorzugt fallen die Bohnen, wenn die Röstkammer 1 zuvor auf die Kaffeemühle aufgesetzt wurde, in die Kaffeemühle hinein.

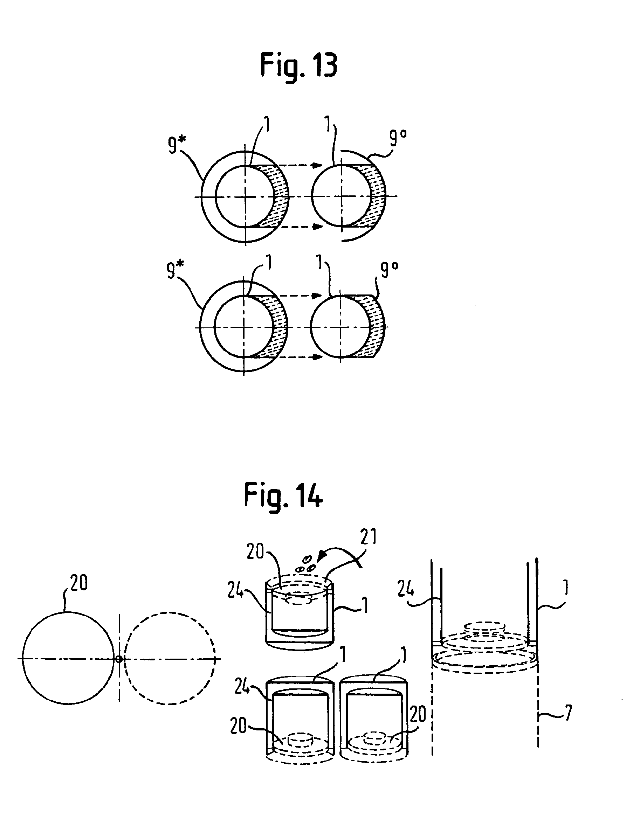

Die Röstkammer 1 ist gemäß zwei beispielhaft skizzierten Ansichten in FIG 13 aus dem Gehäuse bzw. einer von einer Wandung 9* teilweise umschlossenen Aufnahme des Gehäuses seitlich herausziehbar. Die Röstkammer 1 lässt sich dadurch zum Befüllen seitlich herausziehen und anschließend wieder einsetzen. Die fertigen Bohnen lassen sich anschließend aus der wieder herausgezogenen Röstkammer 1 z.B. auskippen.

FIG 14 zeigt anhand verschiedener Ansichten eine weitere Variante in Kombination mit einer Kaffeemühle 7. Zum Befüllen wird der Röstzylinder 24 bzw. die Röstkammer 1 aus einer entsprechenden Gehäuseaufnahme zum Rösten herausgenommen und auf den Kopf gestellt. Ein Teil eines nach innen zylindrischen Siebes 21 in dem Innenraum der Röstkammer 1 wird herabgesenkt und lässt so eine Öffnung 22 für die Bohnen frei. Zum Rösten wird der Zylinder wieder herumgedreht und eingesetzt. Dabei schließt sich die Öffnung durch Schwerkraft dadurch, dass das Sieb nach unten gegen die Öffnung drückt. So können keine Bohnen austreten. Nach der Röstung wird die Röstkammer 1 auf die Kaffeemühle aufgesetzt. Hierbei drückt sich die Öffnung 22 wieder auf und die Bohnen rutschen über das zylindrische Sieb 21 in ein Mahlwerk der Kaffeemühle 7.

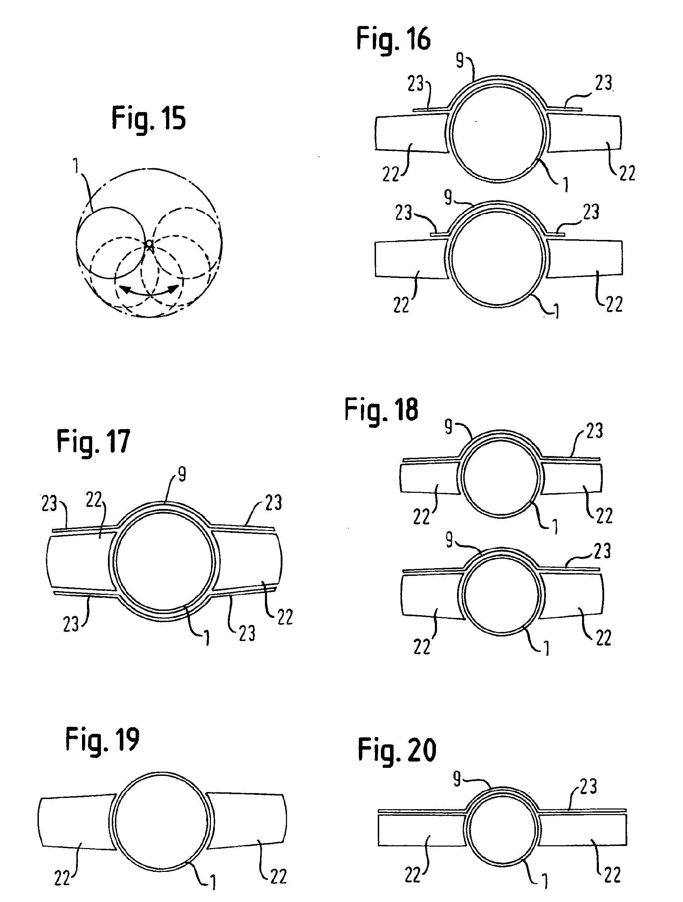

FIG 15 zeigt eine Variante in Kombination mit einer Kaffeemühle. Hier wird ein möglicher Bewegungsverlauf von Röster zu Mühle dargestellt. Die Röstkammer 1 wird von links nach rechts geschwenkt.

FIG 16 zeigt verschiedene bevorzugte Anordnungen mit einer zentral in einem Gehäuse angeordneten Röstkammer 1. Es sollte ein angenehmes Verhältnis zwischen der Röstkammer 1 und Seitenelementen 22 gefunden werden. Bevorzugt wird ein eine Anordnung mit Spiel mit den Spaltbreiten zwischen den Komponenten und Abstand zu der Rückwand 9, 23. Die beiden Seitenelemente laufen konisch zusammen, die Rückwand 23 gemäß einer Variante überdeckt nur die Röstkammer 1 und einen Ansatz der Seitenelemente 22.

FIG 17 zeigt eine weitere Variante zu FIG 16. Die Seitenelemente 22 sind kürzer, aber breiter und laufen konisch zu. Außerdem sind sie nach außen hin gewölbt. Die drei Grundelemente werden von vorne und hinten durch Wände 9, 23 umschlossen.

FIG 18 zeigt weitere Varianten zu FIG 16 und 17. Die Seitenteile 22 seitlich der Röstkammer 1 sind wieder etwas länger, aber immer noch konisch und nach außen gewölbt, es gibt eine Rückwand 9, 23, die sich über die ganze Fläche erstreckt. FIG 19 zeigt eine Variante ohne Rückwand, d.h., der Mittelpunkt insbesondere in Form der Röstkammer 1 ist wieder zentral. FIG 20 zeigt eine weitere Variante. Bei dieser Variante sind die Seitenelemente 22 gerade und sehr schmal. Die Rückwand 9, 23 unterstreicht diese Form.

Möglich sind insbesondere auch Kombinationen der verschiedenen Ausgestaltungen. So können insbesondere die Gestaltungen unter Verwendung verschiedener Materialien, insbesondere Kunststoff, Aluminium und Glas berücksichtigt werden. Eine Oberseite der Röstkammer 1, z. B. ein Deckel, wie aber auch Seitenwandungen oder herausziehbare Komponenten können beispielsweise auch aus Glas oder durchsichtigem Kunststoff ausgebildet sein. Wichtige Elemente heben sich durch das gleiche Material hervor und bilden ihre oberen und unteren Abschlüsse jeweils auf einer Linie. Die Sichtfenster sind deutlich zu erkennen. Dies ermöglicht eine technisch intuitive Bedienung. Die beiden äußeren Elemente und die Röstkammer sind in Aluminium dargestellt, Rückwand und Sockel sind aus Kunststoff. Kunststoff bietet einen Wärmeschutz für die Umgebung des Geräts.

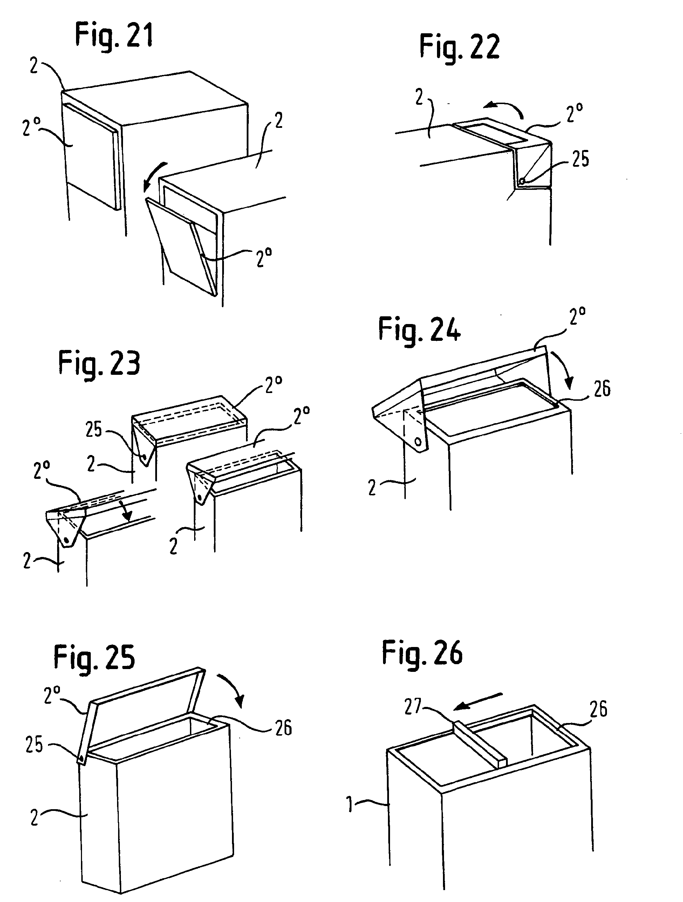

FIG 21 zeigt Ausschnitte eines Wassertanks bzw. Wasserspeichers 2 mit einer Öffnung, welche als Klappe bzw. Deckel 2° im oberen seitlichen Rand ausgestaltet ist, in geöffneter bzw. in geschlossener Stellung. Wichtige Punkte für die Handhabung mit dem Wassertank sind dessen Entnahme, Befüllen und Einsetzen in das Gerät. Außerdem sollte das Gerät bzw. der Wassertank angenehm zu greifen und einhändig verwendbar sein, damit die andere Hand frei ist, um z. B. einen Wasserhahn für die Befüllung des Tanks zu öffnen. Ein anderer wichtiger Punkt ist, dass die Entnahme vorzugsweise nicht nach oben hin geschieht, da eine Normhöhe zwischen einer Arbeitsplatte und einem Unterschrank 50 cm beträgt und es bei einer hohen Dimensionierung des Haushalts-Kaffeedampfrösters möglicherweise Schwierigkeit mit dem Anheben des Wassertanks geben kann. Bei der anhand FIG 21 dargestellten Ausführungsform befindet sich auf der äußeren Seite eine kleine Klappe bzw. ein seitlicher Deckel 24 als die Öffnung, welche mit einem Flügel geöffnet werden kann. So kann der Wassertank befüllt werden.

FIG 22 zeigt eine andere Form einer Klappe zum Verschließen einer Öffnung mittels eines Deckels 24 des Wassertanks 2, welche ebenfalls um ein Gelenk verschwenkbar angeordnet ist. Bei dieser Ausführungsform befindet sich auf der Ebene des Wasserspeichers 2 eine Klappe, die zur Seite nach oben auf die Oberseite des Wasserspeichers 2 geklappt werden kann.

FIG 23 zeigt eine weitere beispielhafte Anordnung, bei welcher ein oberseitiger Deckel 2° als Verschluss der Öffnung des Wasserspeichers 2 eine Klappe ausbildet, welche sich zur Seite aufklappen lässt. Die Drehpunkte liegen als Gelenk 25 seitlich am Wasserspeicher 2. Eine vergrößerte Darstellung einer solchen Anordnung ist in FIG 24 gezeigt, bei welcher eine oberseitige Aufnahmeöffnung im geöffneten Zustand skizziert ist.

Eine noch weitere Variante, bei der die Öffnung durch einen klappbaren Deckel 2° verschließbar ist, ist in FIG 25 skizziert. Dabei ist an einer Längsseite an einem Gelenk 25 des Wasserspeichers 2 der Deckel 2° zum Verschließen der Aufnahmeöffnung 26 angelenkt. Der Deckel bildet somit die Oberseite des Wassertanks und lässt sich nach oben hin aufklappen. Der Drehpunkt liegt auf der oberen hinteren Längsseite des Wasserspeichers.

Vorzugsweise sind derartige Öffnungsverschlüsse auch bei anderen Komponenten, insbesondere auch bei der Röstkammer einsetzbar.

FIG 26 zeigt einen weiteren Verschluss in Form eines Schiebers 27 zum Verschließen der Aufnahmeöffnung 26 der Röstkammer 1. Ein solcher Schieber 27 kann auch bei anderen Komponenten wie insbesondere dem Wasserspeicher 2 eingesetzt werden. Der Schieber ist als verschiebbar gelagerter Deckelabschnitt derart gelagert, dass er über oder unter einen weiteren feststehenden Deckelbereich schiebbar ist, um die Aufnahmeöffnung 26 zu öffnen bzw. zu schließen.

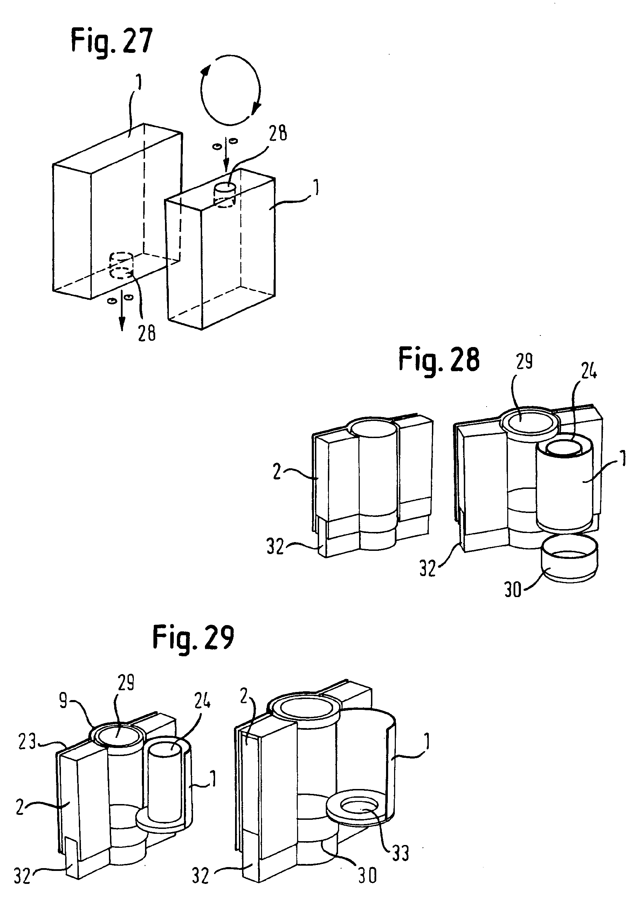

FIG 27 zeigt eine weitere beispielhafte Röstkammer mit einem zentralen Verschluss 28. Der Grundgedanke bei dieser Variante besteht darin, dass die Röstkammer 1 zum Befüllen und Entleeren herausgeschwenkt wird. Das Befüllen mit grünen Bohnen geschieht von oben mit nach oben geschwenktem Öffnungsverschluss 28. Entleert wird die Röstkammer 1, indem ein am Boden der Röstkammer angeordnetes Sieb im Bereich des Öffnungsverschlusses zur Seite geschoben wird. Das Sieb kann insbesondere anstelle des Deckels gemäß FIG 26 eingesetzt sein. Die gerösteten Bohnen fallen dann unten heraus. Vorzugsweise wird bei einer derartigen Ausgestaltung eine Auffangschale als zusätzliche Komponente so angeordnet, dass in dieser die herausfallenden Bohnen gesammelt werden können.

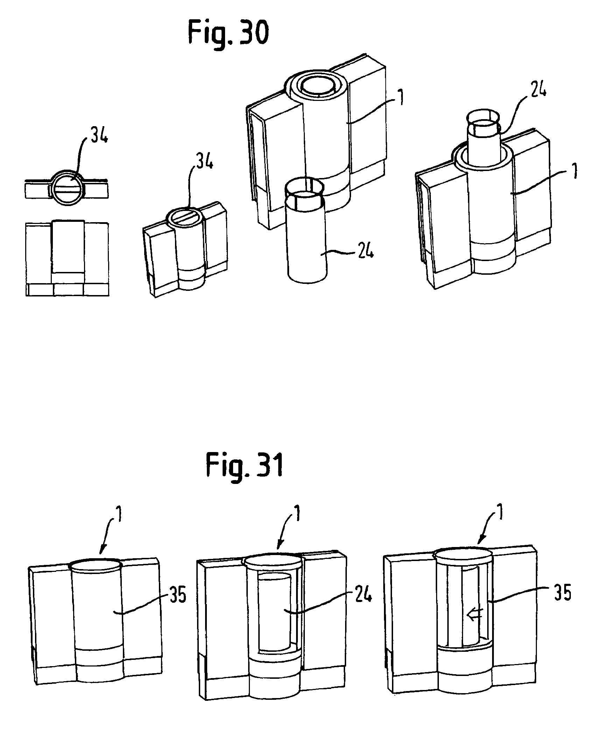

Bevorzugt wird eine Röstkammer, welche durch Hereindrehen der Röstkammerfront in den hintersten Teil der Röstkammer geöffnet ist, wie dies beispielhaft an FIG 31 skizziert ist. In diesem Fall ist eine zylindrische Röstkammer 1 besonders bevorzugt, deren vorderer Seitenwandabschnitt längs einer teilkreisförmigen Bahn um den eigentlichen Röstzylinder 24 herum verstellbar ist. Ist die Röstkammer 1 geöffnet, kann der Röstzylinder entnommen werden. Zum Schließen der Röstkammer 1 muss die Front einfach wieder zurückgedreht werden. Eine solche Variante wird besonders bevorzugt, da die Röstkammer 1 freisteht und somit der Röstzylinder 24 problemlos entnommen werden kann. Vorteilhaft ist, dass die Röstkammer 1 so auch auf einfache Art und Weise für eine Reinigung gut zugänglich ist. Auch ästhetische Überlegungen sind von Bedeutung, da trotz des Öffnens der Röstkammer die Grundform des Röstergeräts erhalten bleibt. Vorzugsweise ist auch bei dieser Ausführungsform ein einhändiges Öffnen und Schließen der Röstkammer möglich.

Gemäß einer anhand FIG 28 und 29 beispielhaft skizzierten Variante ist eine vordere Seitenwand der Röstkammer 1 oder die gesamte Röstkammer 1 verschwenkbar ausgestaltet, um den Röstzylinder 24 aus dem Gehäuse herausschwenken zu können. Vorzugsweise ist unterhalb der herausschwenkbaren Röstkammer 1 eine Auffangschale 30 angeordnet, welche ebenfalls aus dem Gehäuse vorderseitig herausgezogen werden kann. Die Auffangschale 30 ist vorzugsweise als eigenständige Komponente oberhalb eines die Gesamtanordnung stützenden Sockels 31 angeordnet. Oberseitig der herausschwenkbaren Röstkammer 1 ist bevorzugt ein Deckel 29 angeordnet, welcher bei einer Ausgestaltung aus Glas den Einblick in die Röstkammer während des Röstbetriebs ermöglicht. Insbesondere bei einer Ausgestaltung gemäß FIG 29, bei welcher lediglich ein vorderseitiger Wandungsabschnitt aus den sonstigen Gehäusekomponenten herausschwenkbar ist, weist dieser Wandungsabschnitt einen Boden auf, auf welchem der Röstzylinder umfangsseitig abgestützt werden kann. Der Boden weist vorzugsweise eine Durchtrittsöffnung 33 auf, welche das Herausfallen der Bohnen oder von Spelzen aus dem Röstzylinder 24 in die darunter angeordnete Auffangschale 30 ermöglicht. Bei diesen Ausführungsformen wird somit zum Öffnen der Röstkammer 1 der vordere Teil der Röstkammer zur Seite hin aufgeklappt. Der Boden, auf dem der eigentliche Röstzylinder 24 steht, wird hierbei mit herausgeschwenkt.

Gemäß einer anhand FIG 30 in verschiedenen Anordnungen dargestellten weiteren Variante verfügt die Röstkammer 1 über einen abnehmbaren Deckel 34. Zum Befüllen des Röstzylinders 24 wird der Deckel abgenommen. Zum Entnehmen der gerösteten Bohnen wird der Deckel 34 wieder abgenommen, der Röstzylinder 24 von oben herausgenommen, entleert und wieder eingesetzt.

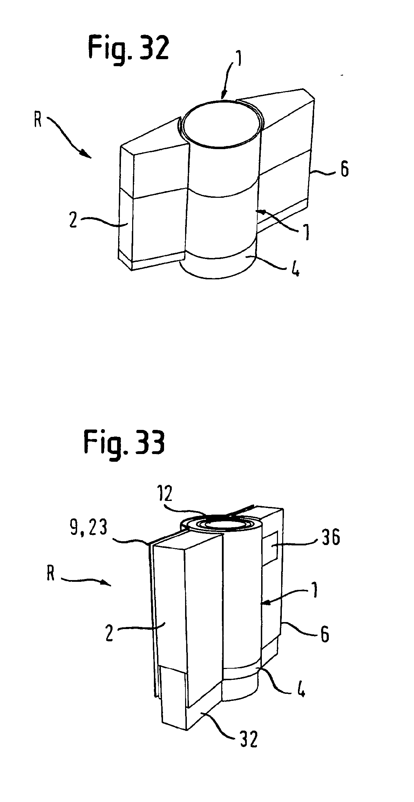

Anhand FIG 31 und 32 ist eine besonders bevorzugte Ausgestaltung dargestellt. Die Röstkammer 1 wird durch das Hereindrehen der Röstkammerfront in das Gehäuse hinein geöffnet. Ist die Röstkammer 1 geöffnet, kann der Röstzylinder 24 entnommen werden. Zum Schließen der Röstkammer wird die Front einfach wieder zurückgedreht. Vorteilhaft ist dabei, dass die Röstkammer 1 freisteht und somit der Röstzylinder 24 problemlos entnommen werden kann. Vorzugsweise kann die Röstkammer 1 auch einfach gereinigt werden.

Ein anhand der FIG 32 - 34 in verschiedenen Ansichten skizzierter Kaffeeröster, welcher mit Wirbelschicht arbeitet, ist vorzugsweise hinsichtlich der einzelnen Komponenten so relativ zueinander angeordnet, dass einerseits ein ästhetisches Design ermöglicht wird, wichtige Bedienkomponenten gut erkennbar angeordnet und ausgestaltet sind und die einzelnen Komponenten für einen optimierten Betriebsablauf relativ zueinander angeordnet sind. Der Röstzylinder 1 bildet den Mittelpunkt.

Vorzugsweise ist der Röster dabei so dimensioniert, dass er weder zu hoch noch zu tief ist, damit er in Normküchen integriert werden kann. Da der Kaffeeröster mit heißem Dampf arbeitet, sind auch Sicherheitsaspekte zu berücksichtigen. Besonders bevorzugt werden Ausgestaltungen mit beispielsweise Glasfenstern, welche am Geschehen im Röster teilhaben lassen, da die Nähe zum Produkt vorliegend wichtig ist. So ist anhand des Bräunungsgrads erkennbar, ob die Bohnen für bestimmte Kaffeesorten ausreichend geröstet wurden. Weiterhin sollen das Einsetzen und die Entnahme des Wassertanks bzw. Wasserspeichers 2 sowie des Röstzylinders einfach sein. Die Röstkammer 1 soll sich leicht öffnen und schließen lassen. Um Bohnen von den Spelzen zu trennen und eine leichte Reinigung zu ermöglichen, sollen in einer Auffangschale 30 sämtliche Reste sowie Kondenswasser und Spelzen der Bohnen gesammelt werden.

Bei der dreigeteilten besonders bevorzugten Ausgestaltung ist die Röstkammer 1 als zentrales zylindrisches Element ausgestaltet. Zwei Seitenelemente, welche sich seitlich davon erstrecken, enthalten weitere Komponenten wie den Wasserspeicher 2, einen Dampfkessel und Elektronik sowie Bedien- und Anzeigeeinrichtungen 36. Im Falle abnehmbarer Komponenten sind diese vorzugsweise rückseitig von einer Rückwand 9, 23 ganz oder teilweise hintergriffen und gestützt. Wie dies insbesondere aus FIG 33 erkennbar ist, ist als Wasserspeicher 2 ein seitlicher Wassertank mit vorderseitigen und rückseitigen Wandungen ausgestaltet, die sich nach unten hin länger erstrecken und einen Sockel 32 seitlich umgreifen. Vorzugsweise reichen die Wandungen, welche im unteren Bereich den Sockel 32 umfassen, aber, wie auch die anderen Elemente, nicht ganz bis auf den Boden. Dadurch gewinnt das Gerät an Leichtigkeit. Im unteren Teil der zylinderförmigen zentralen Anordnung befindet sich die Auffangschale 4, darüber der Bereich mit den Dampfdüsen 6 und darüber schließlich die Röstkammer 1. Während sich auf der linken Seite der Wasserspeicher 2 befindet, befindet sich in den seitlichen Komponenten auf der rechten Seite im unteren Bereich ein Dampfkessel. Darüber sind Bedien- und Anzeigeeinrichtungen 36 angeordnet. Vorzugsweise werden die drei Elemente bzw. Gehäuse zur Aufnahme dieser Komponenten durch eine dünne Rückwand 9, 23 verbunden, welche die Form unterstreicht.

Der Kaffeeröster gemäß insbesondere FIG 32 - 34 zeichnet sich durch eine geschlossene Form aus. Die Vorder- und Rückseite sind deutlich zu erkennen, da sich eine isolierende Rückwand 9 der Form anpasst. Hierbei ergibt sich im oberen Bereich eine konstante Spaltbreite, dennoch entstehen keine offenen Fugen, in denen sich Schmutz sammeln könnte. Durch diese Spaltbreite gewinnt das Gerät an Wertigkeit. Die Röstkammer 1 tritt als zentrales Element hervor und bildet die Mitte des Geräts. Der Röster gliedert sich durch seine Form und Materialwahl gut in das Küchenumfeld ein und tritt nicht als unruhiges Element hervor. Durch seine geringe Tiefe und durch den Wärmeschutz, der es erlaubt, das Gerät direkt an die Wand zu stellen, ist es möglich, die Arbeitsfläche weiterhin zu nutzen. Auch die Höhe des Rösters von lediglich beispielhaft 280 mm lässt sich gut auf der Arbeitsfläche platzieren und ermöglicht problemloses Hantieren mit dem Röster zwischen Küchenarbeitsfläche und Unterschrank mit einem Normabstand von 500 mm.

Durch das transparente Sichtfenster im oberen Teil des Deckels 12 ist es möglich, am Röstprozess im Röster teilzuhaben. Dieses Sichtfenster besteht aus Glas und hat vorzugsweise den gleichen Durchmesser wie die Röstkammer 1. Der Glaseinleger erhebt sich leicht über die anderen Elemente und ist facettiert. Im Röster selbst leuchtet während des Röstvorgangs ein Licht, das den Röstzylinder einsehbar macht.

Auf der linken Seite befindet sich der Wasserspeicher 2. Seine äußere Seite ist transluzent, hier befindet sich eine Skala von Markierungen, die den Wasserstand für jeden Röstgrad anzeigt. Auf der Innenseite des Wasserspeichers 2 befindet sich die Öffnung für die Befüllung. Herausnehmbar ist der Wasserspeicher 2 durch z.B. einen Schnappmechanismus, der sich innerhalb des Wasserspeichers befindet. Durch Führungen (nicht dargestellt) auf der Innenseite eines Aluminiumprofils ist es gewährleistet, dass der Wasserspeicher 2 korrekt eingeführt wird und den Wasseranschluss trifft. Das Aluminiumprofil am unteren Teil des Wasserspeichers umschließt das Sockelelement 32 und bietet dem Wasserspeicher 2 Halt. Das Einsetzen und die Entnahme des Wasserspeichers ist einhändig möglich, so ist die andere Hand frei für das Öffnen und Schliessen eines Wasserhahnes. Befüllt wird dieser Wasserspeicher 2 in Seitenlage. In aufgerichtetem Zustand ist der Wasserspiegel unterhalb der Einfüllöffnung, so kann das Wasser nicht wieder austreten.

Im unteren Teil des mittleren Zylinders befindet sich die Auffangschale 4, in der sich die Spelzen und das Kondenswasser sammeln. In der Auffangschale 4 oder in diese hinein messend befindet sich ein Wasserstandssensor, der die Information "Schalen leeren" weitergibt, wenn das Wasser in der Schale den maximalen Punkt überschritten hat. Die Auffangschale 4 hat eine Führung auf der unteren Seite. Durch einen leichten Druck auf der Vorderseite springt die Schale heraus und lässt sich leicht entnehmen. In der Auffangschale 4 befindet sich ein Sieb, auf dem sich die Spelzen sammeln. Dieses Sieb ist herausnehmbar und kann so geleert werden.

Die Vorderseite der Röstkammer 1 lässt sich leicht durch eine Rotationsbewegung öffnen, indem sich die Front in den Röstzylinder eindreht oder hinter diesen dreht. Zum leichten Bewegen befindet sich auf der Vorderseite eine leichte Vertiefung. Während des Röstprozesses lässt sich die Röstkammer 1 aus Sicherheitsgründen nicht öffnen und ist durch einen Verschlussmechanismus gesichert. Nach dem Rösten kann die Röstkammer 1 wieder geöffnet werden. Da die Öffnung ausreichend Platz bietet, kann der gesamte Röstzylinder 24 für die Entnahme der Bohnen und die Reinigung entnommen werden.

Im rechten Teil des Röstapparates befinden sich das Bedienfeld und das Display als Bedien- und Anzeigeeinrichtung 36. Durch vier Bedienelemente lässt sich das Gerät steuern. Ein Ein- und Ausschalter startet das Gerät. Durch die beiden + / - Tasten lässt sich ein Menü steuern, und mit dem Startknopf können die Vorgänge gestartet werden. Das Display informiert über den Status des Röstvorgangs und über das Fehlen von Wasser oder Kaffee. Durch eine integrierte Waage passt sich die Röstzeit automatisch an die Bohnenmenge an. Es gibt vorzugsweise sieben verschiedene Röstgrade, die bei maximaler Rohkaffeemenge von z.B. 250 g zwischen einer und sechs Minuten dauern, zuzüglich der Kühlphase von einigen Minuten.

Die Reinigung des Geräts ist zum einen durch Auswischen der Röstkammer 1, zum anderen vorzugsweise auch automatisch durch den Menüpunkt "Reinigung" möglich. Bei diesem Menüpunkt sollte der Wassertank maximal befüllt werden. Der Röster durchläuft einen Röstprozess bei höchstem Röstgrad, aber ohne Bohnen. Der Dampf, der dabei in den Röstzylinder 24 geleitet wird, kondensiert an den Wänden des Rösters, läuft herunter und nimmt dadurch den Schmutz mit auf. Auffangschale 4, Sieb und Röstzylinder 24 lassen sich auch in einer Spülmaschine reinigen, das Bedienfeld ist einfach abwischbar.

Der Entwurf zeichnet sich durch seine intuitive Bedienabfolge von links nach rechts aus: links wird das Wasser eingefüllt, in der Mitte die Bohnen, und rechts wird das Gerät bedient.

Der Röstzylinder 24 besteht außen aus Aluminium, genauso wie der äußere Deckel 12, der noch zusätzlich mit einem Glaseinleger versehen ist. Die Röstkammer 1 besteht innen aus Edelstahl. Die Tür an der Vorderseite besteht außen auch aus Aluminium, innen besitzt sie eine Kunststoffschicht. Das Aluminium am ganzen Gerät ist fein gebürstet.

Die Rückwand 9, 23 besteht aus Kunststoff. Die Seitenelemente und der Sockel 32 bestehen ebenso aus Kunststoff, der von einem U-förmigen Aluminiumprofil umschlossen wird. In der Vorderansicht zeigen sich im unteren Bereich die Kunststoffelemente, die dem Gerät Standfestigkeit geben.

Der Kunststoff besitzt eine leichte Struktur und wirkt dadurch matt, er besitzen eine dunkle rötlich-braune Farbgebung. Beide Seiten des Geräts haben eine Rillenstruktur, unterhalb des Wassertanks auf der linken Seite verändert sich diese Struktur zu schrägen Lüftungsschlitzen. Auf der rechten Seite befindet sich unten eine Klappe, die herausnehmbar ist und einen Stecker schützt, mit dem weitere Geräte aus einer Gerätereihe, wie z.B. eine Kaffeemühle oder Kaffeemaschine, verbunden werden können. Die Verarbeitung ist hochwertig, die Materialien sind echt, außerdem zeichnet sich das Gerät durch eine hohe haptische Qualität aus. Bevorzugt wird durch die Steuereinrichtung eine einfache, selbsterklärende und nach-vollziehbare Bedienung ermöglicht, unterstützt durch Klartextanzeigen.

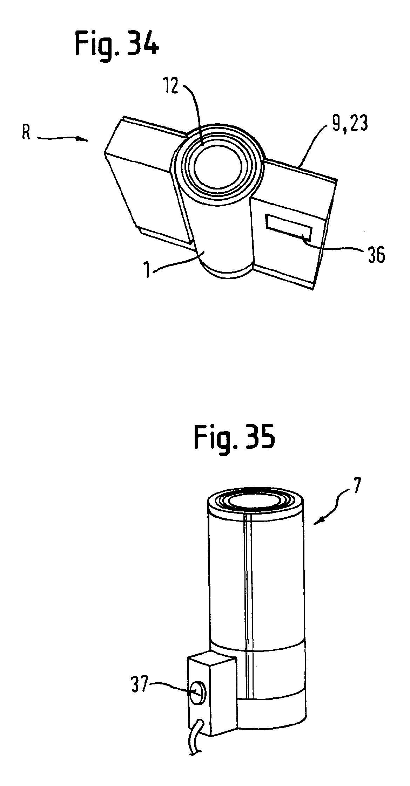

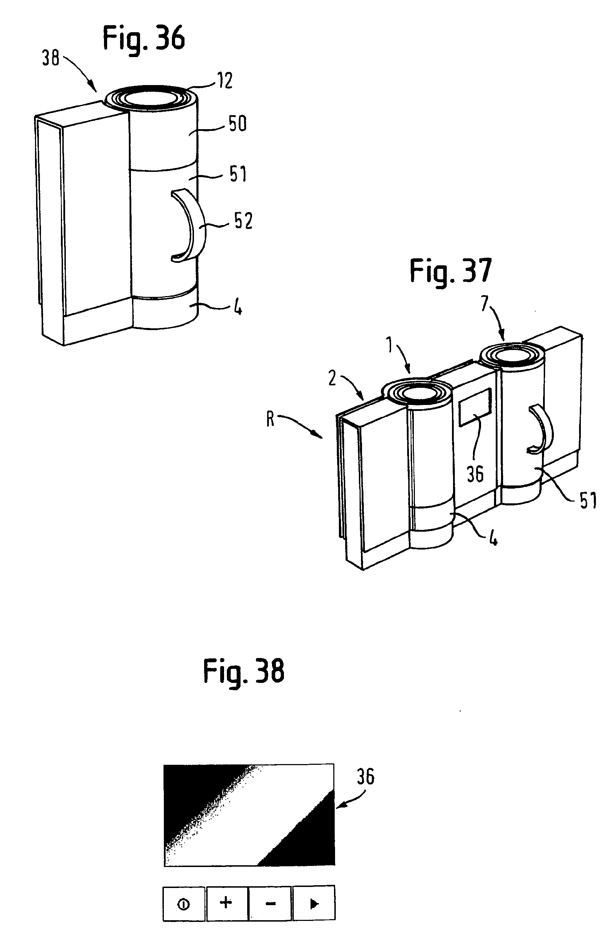

Als mögliche Erweiterung bietet sich eine Produktreihe an, bei welcher der Kaffeeröster und durch eine ähnlich gestaltete bzw. in ihrer Grundform übereinstimmende Kaffeemühle 7 (FIG 35) und / oder Kaffeemaschine 37 (FIG 36) ergänzt ist. Die Kaffeemühle 7 gemäß FIG 35 umfasst u. a. einen Wählschalter für den Mahlgrad, die Kaffeemaschine 37 gemäß FIG 36 umfasst u.a. einen Filteraufsatz 50 mit einem oberseitigen Deckel 12 und eine Kanne 51 mit einem Griff 52 zum Aufnehmen frisch gebrühten Kaffees. Gemäß FIG 37 ist auch eine Kombination in einem Gehäuse 17 möglich.

Die Tasten des Geräts sind vorzugsweise so in die, z.B. aus Aluminium aufgebaute, Oberfläche integriert, dass die Tasten nur das Symbol erkennt, auf das gedrückt wird. An der Stelle dieser Symbole ist das Aluminium vorzugsweise sehr dünn, durch minimalen Druck wird der Kontakt ausgelöst (z. B. als Touch-Panel, Slider ausgebildet).

Die Tür der Röstkammer 1 besteht außen vorzugsweise aus einem Aluminiumprofil, das mit Kunststoff hinterspritzt ist. Dadurch isoliert die Tür die Röstkammer nach außen. Das Aluprofil verfügt über eine Vertiefung (nicht dargestellt), die das Öffnen und Schließen erleichtert.

Jedes dieser Geräte kann für sich alleine stehen, zusammen aber geht das eine Gerät ins andere über. Die Reihenfolge ergibt sich dann aus Rösten, Mahlen und Brühen. Optional sind die Geräte auch fest miteinander verbindbar.

Tasten und Tastaturen einer Bedien- und Anzeigeeinrichtung 36 sind in FIG 38 beispielhaft skizziert.

Die Tasten des Geräts sind vorzugsweise so in die z.B. Aluminium-Oberfläche integriert, dass man nicht sieht, dass es Tasten sind, sich also keine Erhebung, keine Vertiefung und keine Rillen abzeichnen, sondern nur das Symbol, auf das gedrückt wird. An der Stelle dieser Symbole ist das Aluminium vorzugsweise sehr dünn, durch minimalen Druck wird eine Schaltung ausgelöst, z. B. mittels Mikrokontakt-, kapazitiven oder piezoelektrischen Schaltern. Auch hier senkt sich die Oberfläche nicht ein, die Rückmeldung erfolgt akustisch, z. B. durch ein Piepen. Vorteile dieser Tasten liegen nicht nur im Aussehen, sondern auch in der hermetisch dichten Oberfläche. Da hier keine Rillen, Erhebungen oder Vertiefungen vorliegen, sammelt sich an diesen Stellen auch kein Schmutz. Die Reinigung erfolgt einfach durch Abreiben mit einem Edelstahlreiniger. Außerdem sind diese Tasten robust und vandalensicher, besitzen eine dauerhafte und abriebfeste Oberfläche und haben eine lange Lebensdauer. Da der Baukörper sehr flach ist und nach hinten wenig Platz braucht, lässt sich diese Tastatur leicht in ein Gerät integrieren.

Nachfolgend wird eine beispielhafte Bedienstruktur von links nach rechts beschrieben. Links befindet sich der Ein-/Ausschalter. Unter dem auf der Anzeigeeinrichtung darstellbaren und auswählbaren Hauptmenü befinden sich das Rösten und das Reinigen. Wenn der Einschalter betätigt wird, erscheint auf dem Hauptmenü Rösten. Durch Drücken der Tasten + / - kann zwischen Rösten und Reinigen hin und her geschaltet werden. Durch Verharren auf z.B. Rösten und durch Betätigen der Starttaste kommt man in ein erstes Untermenü der Statusanzeigen. "Wasser einfüllen", "Bohnen einfüllen", "Schalen leeren", "Tür schließen" sind Meldungen, die automatisch auftreten, wenn etwas fehlt. Diese Meldungen werden durch Sensoren erfasst, die ein Signal weitergeben. Das Gerät geht automatisch durch alle Punkte und meldet der Reihenfolge nach, wenn ein Mangel auftritt. Wird z.B. der Wassertank entnommen, weil das Signal "Wasser einfüllen" erscheint, tritt das Signal "Wassertank fehlt" auf. Bei der Mangelfunktion "Bohnen einfüllen" wird nach dem Einfüllen der Bohnen in den Röstzylinder und Wiedereinsetzen des Zylinders die Bohnenmenge auf der Anzeigeeinrichtung gezeigt. Ist die mittels einer integrierten Waage gewogene Gesamtmenge von z.B. 250 g überschritten worden, so tritt eine Warnmeldung "Maximalmenge überschritten" auf, d.h. ein Signal, um die Bohnenmenge in der Röstkammer zu reduzieren. Während der Röstzylinder entnommen ist, tritt auf dem Display die Meldung "Bohnen einfüllen" auf. Bei der Meldung "Schalen leeren" tritt nach dem Entnehmen der Auffangschale die Meldung "Schalen fehlen" auf. Ist die Tür nach dem Befüllen des Röstzylinders nicht richtig geschlossen, erscheint die Fehlermeldung "Tür schließen" als Warnhinweis.

Sind alle Mangelmeldungen durchlaufen, oder ist kein Bedarf da, so dass die Meldungen nicht erscheinen, ist es möglich, den Röstgrad zu wählen. In der ersten Zeile des insbesondere 3-Zeilen-Displays erscheint die Menge Rohkaffee und in der zweiten Zeile der Röst-Grad der letzten Röstung. Der Röst-Grad blinkt drei Sekunden auf, dann steht er still und "Gerät starten" taucht in der untersten Zeile des Displays auf. Durch Schalten von + / - kann ein anderer Röstgrad gewählt werden. Auch hier blinkt der gewählte Röstgrad drei Sekunden auf, danach steht er still und es erscheint "Gerät starten". Jetzt wird die Starttaste betätigt. Ist das Gerät gestartet, ist in der Displayanzeige in der ersten Zeile die Menge Rohkaffee zu sehen, in der zweiten die Röstungsart und in der dritten Zeile die verbleibende Röstzeit. Ist die Röstung fertig, so zeigt das Display in der ersten Zeile immer noch die Menge Kaffee, in einer zweiten Phase als einer "Kühlphase", und in der dritten immer noch die verbleibende Restzeit. Ist die Kühlphase durchlaufen, so ändert sich das Display dahingehend, dass in der ersten Zeile immer noch die Menge steht, in der zweiten Zeile die Röstart, und in der dritten Zeile "Röstung fertig". Nach drei Sekunden wechseln sich Röstgrad und die Meldung "Schalen leeren" wechselnd blinkend ab. Entfernt man jetzt die Auffangschale, so zeigt sich die Meldung "Schalen fehlen". Die Bohnen sind entnehmbar. Nach fünf Minuten ohne Aktion tritt auf dem Display in der zweiten Zeile die Uhrzeit auf. Das gleiche geschieht auch, wählt man nach dem Einschalten keine Taste.

Nach dem Einschalten kann im Hauptmenü auch Reinigung gewählt werden. Auch hier treten bei Bedarf die Aufforderung "Wasser füllen" und die Meldung "Wassertank fehlt" oder "Schalen leeren" und "Schalen fehlen" auf. Nachdem die Röstkammer geschlossen ist und die Sensoren das Gerät durchlaufen haben, beginnt die Reinigung. In der mittleren Zeile erscheint "Reinigung läuft", die untere Zeile gibt die Restdauer an. Ist die Reinigung abgeschlossen, tritt in die zweite Zeile "2. Kühlphase". Ist die beendet, tritt "Reinigung fertig" in die dritte Zeile des Displays und in der zweiten Zeile erscheint "Schalen leeren". Nach fünf Minuten erscheint die Uhr in der zweiten Zeile des Displays. Das Menü erreicht man wieder durch die + / - Tasten.

Nachfolgend werden Entformung und Herstellung beschrieben.

Die Kunststoffteile werden auf einfache Art und Weise mit einem Kunststoffspritzverfahren hergestellt. Die Aluminiumteile sind als Aluminiumstrangpressprofile herstellbar, was sowohl die zylindrische als auch die u-förmige Variante betrifft.

Die Rückwand 9; 9*; 23, die auch gleichzeitig den Boden bildet, ist aus Kunststoff. Sie ist an bestimmten Stellen verstärkt und übernimmt dadurch eine isolierende Funktion. Ihre Form lehnt sich an die einzelnen Baukörper an und verbindet sie dadurch. Sie definiert die Vorder- und Rückseite des ansonsten symmetrischen Geräts.

Der Wassertank bzw. Wasserspeicher 2 besteht z.B. aus zwei Kunststoffformteilen, die verschweißt werden. Der äußere Teil hat eine rechteckige Form. Die Seite, welche die Außenseite des Wassertanks darstellt, besteht aus einer Rillenstruktur. Der innere Teil des Wassertanks zeichnet sich durch einen Vorsprung aus, der dadurch entsteht, dass sich im unteren Teil ein Wasseranschluss befindet. An der langen Längsseite werden die Teile miteinander verschweißt, an der kurzen befindet sich die Einfüllöffnung. Diese Seite lehnt sich an die Kreisform des Zylinders an und ist leicht nach innen schräg gestellt. So bildet sie eine Rille, in der das Wasser nur in eine Richtung laufen kann.

Die Tür der Röstkammer 1 besteht außen aus einem Aluprofil, das mit Kunststoff hinterspritzt ist. Dadurch isoliert die Tür die Röstkammer 1 nach außen. Das Aluprofil verfügt über eine Vertiefung, die das Öffnen und Schließen erleichtert.
Der Röstzylinder 24 besteht aus Edelstahl. Im unteren Bereich lässt sich ein Sieb 20 einklemmen.

Das Gehäuse 5 von Dampfkessel 3, 6* und Elektronik 10 besteht analog zum Wasserspeicher 2 aus insbesondere zwei Teilen, die miteinander verschweißt werden. Beide Teile sind rechteckig. Die Innenseite des inneren Teils passt sich durch die konkave Form dem Röstzylinder 24 an. Die Außenseite des äußeren Teils besteht wieder aus einem Rillenprofil. Beide Teile besitzen im oberen Drittel eine Aussparung für das Anzeigeeinrichtungs- bzw. Displayfenster.

Das rechte vordere Sockelteil bildet als Kunststoffelement Vorderfront und Außenseitenfläche des Sockels 32 aus und deckt nach vorne und seitlich eine Grundplatte ab. Seitlich befindet sich eine Aussparung für eine Klappe, die einen Anschlussstecker verdeckt. Das rechte hintere Sockelteil bildet als Kunststoffelement Rückseite und Innenseitenfläche des Sockels. Die Innenseite bildet durch die konkave Form den Zylinder des Mittelteils nach. Die Rückseite ist nicht bis nach unten durchgezogen, da hier später der Vorsprung der Rückwand dieses Formteil schließt.

Das linke vordere Sockelteil bildet als Kunststoffelement Vorderfront und Außenseitenfläche des Sockels 32 und deckt nach vorne und seitlich die Grundplatte ab. Seitlich befinden sich im unteren Bereich Rillen, im oberen Bereich Lüftungsschlitze. Das linke hintere Sockelteil bildet als Kunststoffelement Rückseite und Innenseitenfläche des Sockels aus. Die Innenseite bildet durch die konkave Form den Zylinder des Mittelteils nach. Die Rückseite ist L-förmig und ist nicht bis nach unten durchgezogen, da hier später der Vorsprung der Rückwand dieses Formteil schließt. Weiter verfügt das Kunststoffteil über einen waagerecht liegenden Zylinder, der durch die Innenseite durchreicht und zwischen zwei Ebenen eingespannt ist.

Der Vorsprungdeckel des linken Sockels hat als Kunststoffelement eine treppenartige Form. Die mittlere von drei Flächen verfügt über ein Loch, durch das später der Wasseranschluss führt.

Die Form der Rückseite des Röstzylinders als ein Edelstahlelement ist ein Kreisabschnitt, der auf beiden Seiten den Scheitelpunkt dieses Kreises überschreitet. An der unteren Seite des Röstzylinders befindet sich eine Iochähnliche Struktur, durch die der Dampf aufsteigt und die Bohnen bewegt.

Der Glasaufsatz des Deckels 12 besitzt eine kreisrunde Form und ist im oberen Bereich facettiert. Die Oberseite ist flach, die Unterseite konkav, da der aufsteigende Dampf am Glas kondensiert und so nach außen läuft und nicht in das Röstgut tropft. Umlaufend hat der Glaseinleger einen Vorsprung, an dem er später befestigt wird.

Der Aluminiumdeckel besteht aus mehreren Ringen, die so zusammengesetzt sind, dass Öffnungen gebildet werden, aus denen der Dampf aus dem Inneren des Röstzylinders 24 austreten kann. An z.B. vier Stellen, die in symmetrischem Abstand zueinander stehen, sind die Ringe miteinander verbunden.

Nach vorne und hinten bildet das Kunststoffsieb als Sieb in der Auffangschale 4, 30 eine Rundung, zu den Seiten hin ist es gerade. Im unteren Bereich des Kunststoffringes lässt sich ein Metallsieb einspannen. Dieser Ring verfügt über einen Griff, der im Schnitt eine ovale Form hat und die kurzen Seiten miteinander verbindet.

Die Auffangschale 4, 30 als eine Kunststoffschale entspricht in der Grundform der des Siebs. Die Vorderseite der Auffangschale hat eine Aluverblendung mit einer Vertiefung an der linken Seite, die der Vertiefung in der Tür der Röstkammer 1 entspricht und sie nach unten weiterführt. Vorne besitzt die Auffangschale 4 einen Vorsprung nach außen, der eine Blende bildet, für die Einsicht ins Gerät. Im Schnitt hat sie nach innen einen Vorsprung, auf dem sich das Sieb auflegen lässt, weiter bilden sich auf der Unterseite insbesondere vier Rillen. Die beiden inneren Rillen bilden die Führungsschiene, die beiden äußeren sind etwas länger und geben der Schale Standfestigkeit. Betrachtet man die Schale von der Seite, wird deutlich, dass die Vorderseite der Schale die Grundplatte überlappt. Im hinteren Bereich der Schale befindet sich ein Vorsprung, in dem der Schnappmechanismus der Schale platziert ist.

Die beiden Aluminiumprofile, welche die beiden Seitenelemente umschließen, sind u-förmig. Im hinteren unteren Bereich haben sie einen Vorsprung, durch den sie am Vorsprung der Rückwand aufliegen können. Das rechte Profil hat im oberen Bereich eine Aussparung für die Anzeigeeinrichtung. Im linken Profil befinden sich Führungsschienen, an denen der Wasserspeicher 2 geführt wird.

Die Hinterseite der Kunststoffumfassung der Dampfdüsen 6 ist in der Draufsicht kreisrund bis über den Scheitelpunkt des Kreises hinweg. Dort ergibt sich ein Versatz nach innen, in dem ein Aluminiumprofil eingefasst werden kann. Auf der hinteren Seite befindet sich eine Nut, in der die Wasserleitung läuft. Im linken Bereich befindet sich eine Aussparung, in die der Zylinder des linken hinteren Sockelteils hereinragt. Auf der rechten Seite befindet sich auf der gegenüberliegenden Seite der Aussparung für den Zylinder ein kleineres kreisrundes Loch, durch das die Dampfleitung geführt wird. Auf der hinteren Seite ist die Umfassung etwas länger. Ein Aluminiumprofil verkleidet die äußere Seite der Umfassung der Dampfdüsen 6 und empfindet deren Form nach.

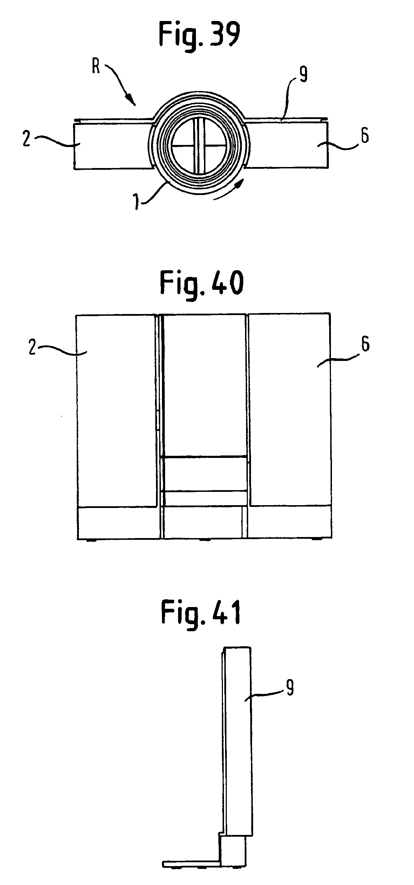

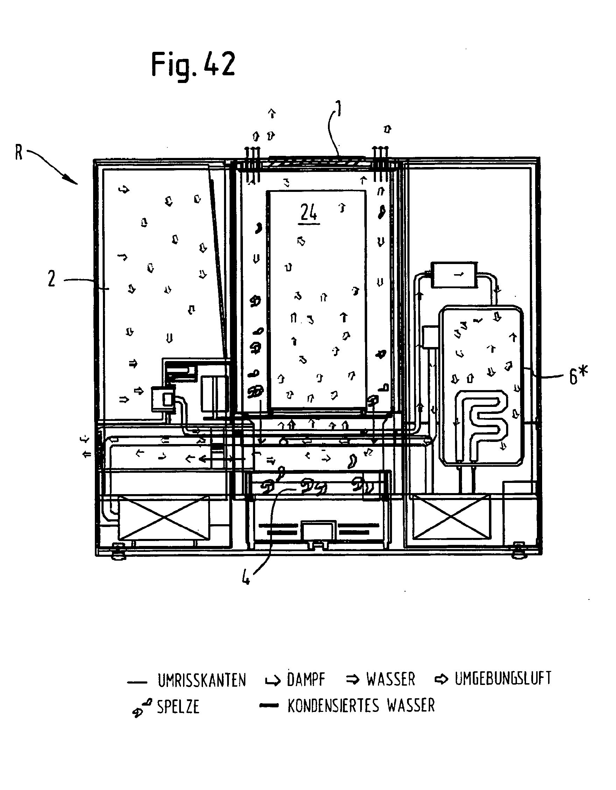

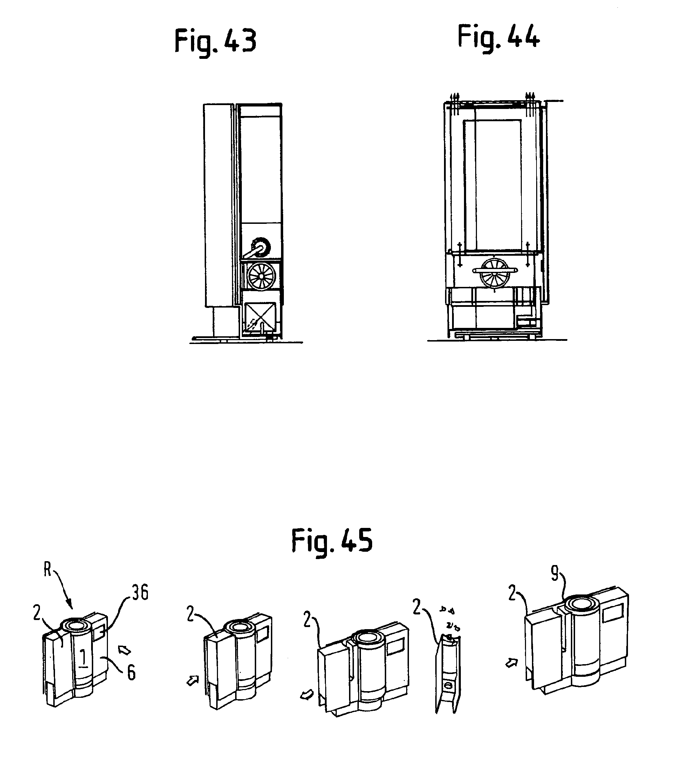

Technische Details der besonders bevorzugten Ausführungsform des Dampfrösters gemäß der FIG 33 und 34 werden anhand der FIG 39 - 44 beschrieben. FIG 39 zeigt eine Draufsicht auf den Dampfröster mit der durch den Pfeil angedeuteten Drehrichtung zur Entfernung der Röstkammer 1 und der Rückwand 9. FIG 40 zeigt eine Vorderansicht auf den Dampfröster ohne Röstkammer. FIG 41 zeigt eine Seitenansicht ohne Aufbau der vorderseitigen Komponenten. FIG 42 zeigt in Vorderansicht eine Skizze der Komponenten eines Dampfröstgeräts, FIG 43 und 44 entsprechende Seitenansichten.

Die Wassereinheit wird über den Wasseranschluss mit dem Wasserspeicher 2 verbunden. Im oberen Bereich sitzt der Schnappverschluss, an dem der Wasserspeicher einschnappt. Hinter dem Schnappverschluss befindet sich ein Motor zur Verschiebung von Lochscheiben einer Lüftungsrichtungsregelung. Weiter unten, gegenüber den Lüftungsschlitzen befindet sich der entsprechend ausgestaltete Lüfter. Im unteren Bereich der Wassereinheit befindet sich ein Netzteil.

Eine Rösteinheit besteht ebenfalls aus mehreren Komponenten. Innerhalb der Röstkammer 1 befindet sich der Röstzylinder 24. Der Röstzylinder 24 sitzt auf einem Ring der Lochscheiben zur Lüftungsrichtungsregelung. Die Lüftungsrichtungsregelung gibt während des Röstvorgangs den äußeren Teil frei, damit durch den seitlich sitzenden Ventilator bzw. Lüfter während des Röstprozesses der Dampf aus dem Röstzylinder 24 herausventiliert werden kann. Beim Kühlprozess verdrehen sich die Lochscheiben, wobei der äußere Teil geschlossen und der mittlere geöffnet wird. Durch diesen wird Umgebungsluft in die Röstkammer 1 geblasen, womit die gerösteten Kaffeebohnen gekühlt werden. Die Tür kann durch eine Rotationsbewegung in die Röstkammer 1 eingedreht werden. Die Röstkammer 1 wird oben durch einen Deckel 12 mit Sichtfenster verschlossen.

Unterhalb der Lochscheiben befindet sich der Dampfdüsenring, der während des Röstprozesses Dampf in die Röstkammer 1 bläst. Unterhalb dieses Rings befindet sich die entnehmbare Auffangschale 4 mit dem Auffangsieb. Hier werden Kondenswasser und Spelzen gesammelt.

Auf der Vorderseite der Dampfeinheit befinden sich die Anzeigeeinrichtung und das Bedienfeld. Eine Wasserpumpe in der Dampfeinheit pumpt das Wasser aus dem Wasserspeicher 2 über eine Leitung in den Dampfkessel 6*, in dem das Wasser mit Hilfe eines Heizelementes innerhalb des Kessels zu Dampf verwandelt wird. Dieser Dampfkessel befindet sich im mittleren Teil der Dampfeinheit. Unten links befindet sich das Netzteil, das Wasserpumpe und Dampfkessel mit Energie versorgt. Gegenüber des Netzteils unten rechts befindet sich eine Steckverbindung für die Energieübertragung für Zusatzgeräte wie zum Beispiel Kaffeemühle oder Kaffeemaschine aus der gleichen Produktreihe.

Rückwand 9 und Bodenplatte bilden ein Element. Die Füße sind an der Bodenplatte befestigt und sind so platziert, dass sie für das Gerät einen sicheren Stand gewährleisten.

FIG 45 zeigt in Teildarstellungen von links nach rechts den Vorgang des Auffüllens des Wasserbehälters 2. Zunächst kann im linken Teilbild ein Nutzer, wie durch den Pfeil angedeutet, durch Bedienung der Bedien- und / oder Anzeigeelemente 36 den Röster ausschalten. Dann kann er durch seitlichen Druck, wie durch den Pfeil im eine Position weiter rechts eingezeichneten Teilbild angedeutet, eine Verriegelung (Druckverschluss) des Wasserbehälters 2 lösen und diesen dann, wie im mittleren Teilbild angedeutet, herausziehen. Der Wasserbehälter 2 ist dann mit Wasser befüllbar, insbesondere in der Seitenlage einhändig befüllbar, wie im zweiten Teilbild von rechts gezeigt. Das Wasser läuft dabei über eine Rinne in das Innere des Wassertanks 2. Die Einfüllöffnung befindet sich im oberen Teil des Wassertanks 2. Der Wassertank 2 ist, da er in der Seitenlage gefüllt wird, aufgrund seiner geringen Höhe gut unter einem Wasserhahn befüllbar. Im letzten Bild wird der Wasserbehälter 2 wieder durch Druck mit dem Röster verbunden und verriegelt.

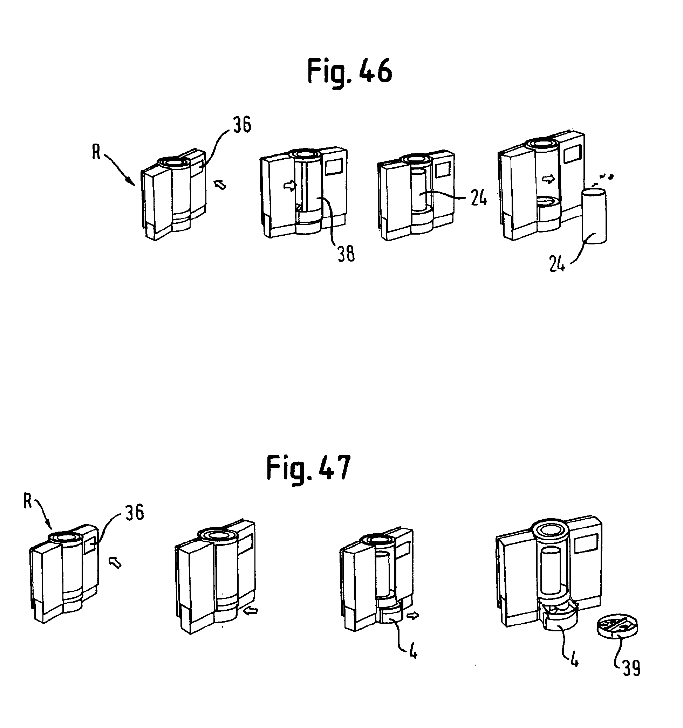

FIG 46 zeigt in Teildarstellungen von links nach rechts den Vorgang der Entname des Röstzylinders 24. Zunächst kann im linken Teilbild ein Nutzer, wie durch den Pfeil angedeutet, durch Bedienung der Bedien- und / oder Anzeigeelemente 36 den Röster ausschalten. Dann kann er durch seitlichen Druck, wie durch den Pfeil im eine Position weiter rechts eingezeichneten Teilbild angedeutet, durch eine Rotationsbewegung eine Tür 38 öffnen. Die Tür 38 des Rösters lässt sich in den Röstraum drehen. Die Tür 38 weist eine Vertiefung zum Eingreifen auf (nicht dargestellt), die das Öffnen erleichtert. Im nächsten Teilbild zur rechten liegt der Röstzylinder 24 frei und kann, wie im rechten Teilbild dargestellt, aus der Röstkammer 1 entnommen werden. Das Einsetzen des Röstzylinders 24 geschieht dazu umgekehrt.

FIG 47 zeigt in Teildarstellungen von links nach rechts den Vorgang der Entnahme des Auffangbehälters 4. Zunächst wird im linken Teilbild ein Nutzer, wie durch den Pfeil angedeutet, durch Bedienung der Bedien- und / oder 36 den Röster ausschalten. Dann wird er durch seitlichen Druck, wie durch den Pfeil im eine Position weiter rechts eingezeichneten Teilbild angedeutet, eine Verriegelung (Druckverschluss) des Auffangbehälters 8 lösen und diesen dann, wie im mittleren Teilbild angedeutet, herausziehen. Die Auffangschale 4 fängt das Kondenswasser auf, welches bei der Röstung entstanden ist. Der Dampf schlägt sich an den Wänden des Rösters als Kondenswasser nieder und läuft dann in die Auffangschale. Im oberen Teil der Auffangschale 4 ist ein herausnehmbares Sieb 39 vorgesehen, welches die anfallenden Spelzen auffängt. Die Spelzen fallen während des Röstvorgangs über den oberen Rand des Röstzylinders 24 und sammeln sich in dem Sieb 39 der Auffangschale 4. So wird auch eine Trennung von Spelzen und Kaffeebohnen gewährleistet.

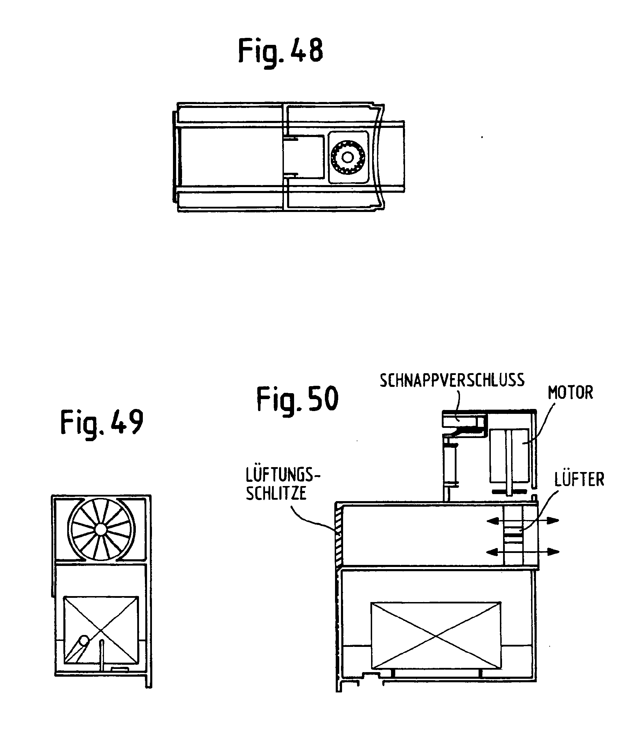

Ein Wasserverlauf ist anhand der FIG 48 - 50 und 51 - 54 veranschaulicht. Diese Darstellung zeigt den gesamten Verlauf von Wasser, Dampf und Spelzen im Kaffeeröster. Für eine anschauliche Darstellung werden die Verläufe einzeln dargestellt. Anhand dieser Darstellung sieht man den Verlauf von Wasser zu Dampf. Volllinige Pfeile stellen das Wasser dar, die gepunktete Pfeile den Dampf.

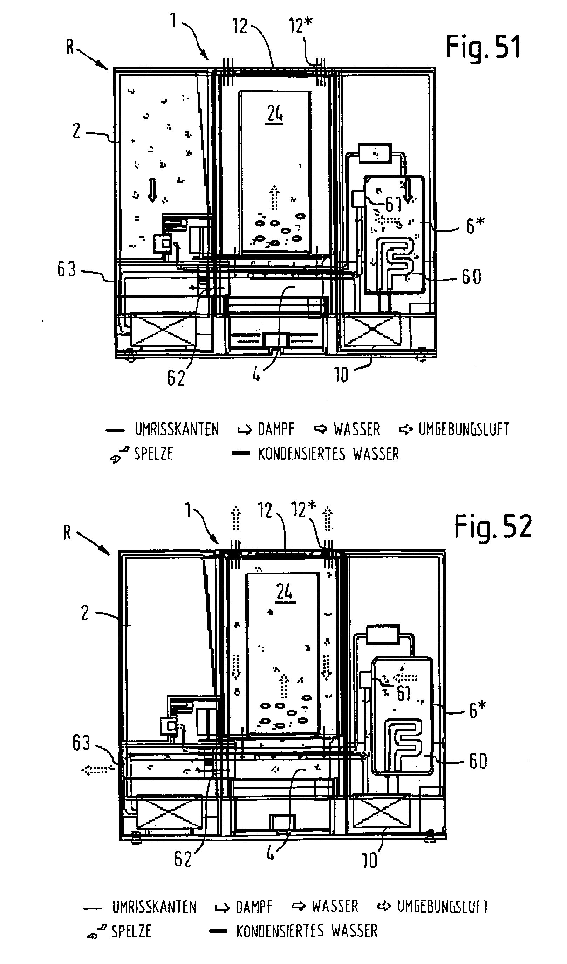

Im Wasserspeicher 2 befindet sich bei FIG 51 das Wasser, das über die Wasserleitung in den Dampfkessel 6* gepumpt wird. Der Dampfkessel 6* ist während des Röstvorgangs immer bis zur Hälfte mit Wasser gefüllt. Ein Heizelement 60 erwärmt das Wasser bis Dampf entsteht. Dieser Dampf befindet sich im oberen Teil des Dampfkessels 6*. Ist der Druck groß genug, öffnet sich das Druckventil 61, und der Dampf wird über die Dampfleitung durch die Dampfdüsen 6 in die Röstkammer 1 geblasen.

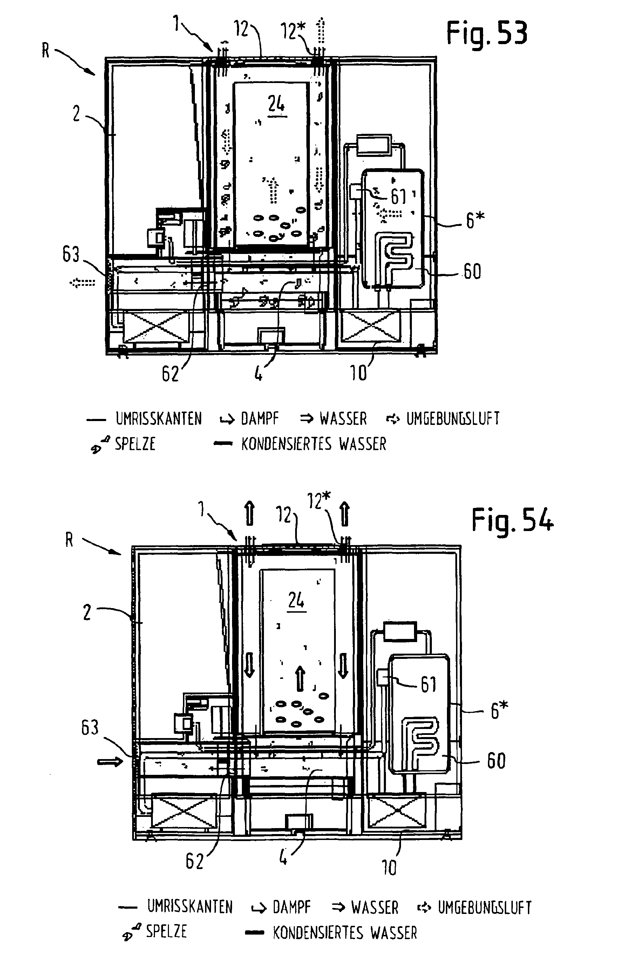

Die Darstellung in FIG 52 und 53 zeigt den Weg des Dampfes im Kaffeeröster. Der Dampf entsteht im Dampfkessel 6* und wird über die Leitung in die Röstkammer 1 geblasen. Hier steigt der Dampf auf. Ein Teil des Dampfes kondensiert und wird als Kondenswasser in der Auffangschale 4 gesammelt. Ein weiterer Teil tritt über die Lüftungsschlitze 12* im Deckel 12 nach oben aus, der letzte Teil wird durch einen Ventilator 62 an den Seiten der Röstkammer 1 nach unten gesogen und tritt links durch die Lüftungsschlitze 63 nach außen.

In FIG 54 sieht man den Verlauf der Kühlungsluft für die Kaffeebohnen. Hier wird zusätzlich zum Dampfweg der Weg der Spelzen illustriert. Durch den Ventilator 62 wird in umgekehrter Richtung kalte Luft von außen durch die Lüftungsschlitze 63 nach innen geblasen. Die Spelzen werden durch den Dampfsog nach unten gezogen und sammeln sich so im Sieb der Auffangschale 4.

Wichtig für die Proportionsfindung einzelner Komponenten des Dampfrösters relativ zueinander ist es, dass die einzelnen Baukörper gut aufgeteilt sind, damit das Einsetzen und die Entnahme angenehm ist und der Platz sinnvoll genutzt werden kann. Außerdem unterstreicht die Aufteilung vorzugsweise die Handhabung und den Verlauf der Bedienung. Die Anordnung sollte ist nicht nur technisch umsetzbar sondern berücksichtigt auch den Vorgänge im Gerät. Die zentrale Stellung nimmt die Röstkammer ein, die das wichtigste Element ist.

Um eine Vorstellung davon zu bekommen, wie viel Raum Dampfkessel, Wassertank und Elektronik, Pumpe, Schläuche, Druckventil etc. einnehmen, können Vergleiche zu einem für sich bekannten Dampfbügeleisen gezogen werden. Dessen Proportionen entsprechen in etwa denen des Kaffeerösters.

Die Größe der Röstkammer ist entscheidend für das weitere Design, da Proportionen festgesetzt werden. Diese Größe ist abhängig vom Umfang der gewünschten Wirbelschicht. Den Umfang kann man berechnen, indem bestimmte physikalische Merkmale von Dampf miteinbezogen werden. Um Berechnungen für Dampfbügeleisen oder Industrieanlagen zur Kaffeeröstung auf einen Heimröster anzuwenden, werden die Mengen, Größen und weiteren Parameter angepasst. Wichtig für die Berechnung der Größe der Röstkammer ist die Dampfgeschwindigkeit, die durch den Dampfeintrittsmassenstrom, den Stoffwerten für den eintretenden überhitzten Dampf und den Durchschnitt des Apparates berechnet wird. Mit der Dampfgeschwindigkeit kann die RE-Zahl (Reynolds-Zahl für den Wirbelpunkt) berechnet werden, genauso wie die Ar-Zahl (Archimedes-Zahl). Mit diesen Werten lässt sich das relative Lückenvolumen der Wirbelschicht berechnen. Nun hat man alle Voraussetzungen, um die Wirbelschichthöhe zu bestimmen.

Die Röstkammer hat z.B. einen Durchmesser von 70 mm. Dieser Durchmesser wurde im Vorfeld festgelegt. Durch Berechnung zeigte sich, dass die Röstkammer dann eine Höhe von 156 mm haben muss. Das Wasser, das benötigt wird, um die geforderte Menge Dampf zu erzeugen, liegt dabei im höchsten Fall bei 700 ml. Deswegen muss der Wassertank mindestens so viel Volumen fassen.

Diese Proportionsanordnungen beziehen sich auf die Elemente des Rösters und sind nur geometrische Grundformen.

### Bezugszeichenliste:

- 1; 1*: eine Röstkammer
- 2: Wasserspeicher
- 2°: Deckel von Wasserspeicher oder Röstkammer
- 3; 6*: Dampfkessel
- 4: Auffangschale für Wasser und Spelzen
- 5: Bereich für Pumpe und Technik
- 6: Bereich mit Dampfdüsen
- 7: Kaffeemühle
- 8: Auffangbehälter unter Kaffeemühle
- 9; 9*: Rückwand; Wandung
- 10: Steuerelektronik
- 11: Sockelelement
- 12: Deckel
- 12*: Lüftungsschlitze
- 13: Gehäuse mit Kaffeemühle
- 14: oberseitige Öffnung in 13
- 15: Vertiefung
- 17: gemeinsames Gehäuse mit Röstkammer und Kaffeemühle
- 18: Röstkammerboden
- 19: Achse
- 20: Auffangschale unter Röstkammer
- 21: zylindrisches Sieb bei 18
- 22: Öffnung in 18
- 23: Rückwand
- 24: Röstzylinder
- 25: Gelenk
- 26: Aufnahmeöffnung
- 27: Schieber
- 28: zentraler Öffnungsverschluss
- 29: Deckel
- 30: Auffangschale unter Röstkammer
- 31: Sockel
- 32: Sockel
- 33: Durchtrittsöffnung
- 34: Deckel
- 36: Bedien- und/oder Anzeigeelemente
- 37: Kaffeemaschine
- 38: Tür zur Röstkammer
- 39: Sieb
- 50: Filteraufsatz von Kaffeemaschine
- 51: Kanne
- 52: Griff
- 60: Heizelement
- 61: Druckventil
- 62: Ventilator
- 63: Lüftungsschlitze
- R: Dampfröster

## Patentansprüche

1. Haushaltskaffeeröster (R), der ein Dampfröster (R) mit einer Röstkammer (1) ist, **dadurch gekennzeichnet, dass** er ein Gehäuse (17) umfasst, in welchem zusätzlich zu der Röslkammer (1) eine Kaffeemühle (7) angeordnet Ist und/oder dass die Röstkammer (1) aus einem Gehäuse (11) herausnehmbar und unterseitig zum Aufsetzen auf eine Kaffeemühle (7) ausgebildet ist.

2. Haushaltskaffeeröster (R) nach Anspruch 1, **dadurch gekennzeichnet, dass** er ein Wirbelschichtröster (R) ist.

3. Haushaltskaffeeröster (R) nach Anspruch 2, **dadurch gekennzeichnet, dass** er mindestens umfasst:
- einen Wasserspeicher (2),
- einen Dampfkessel (6; 6*),
- eine Auffangschale (4; 30) und
- eine Steuerelektronik (10).

4. Haushaltskaffeeröster (R) nach einem vorstehenden Anspruch, bei dem eine Röstkammer (1) einen verstellbaren Bodendeckel (18; 20; 28) aufweist, der ausgestaltet ist zum Öffnen in einen geöffneten Zustand des Bodendeckels zum Einfüllen und/oder Ausgeben von Bohnen und der schließbar ausgestaltet ist in einen geschlossenen Zustand des Bodendeckels zum Beibehalten von Bohnen in der Röstkammer.

5. Haushaltskaffeeröster (R) nach Anspruch 4, **dadurch gekennzeichnet, dass** der Bodendeckel (20) schwerkraft-betätigbar ausgebildet ist zum Öffnen des Bodendeckels bei einer Stellung mit dem Bodendeckel oberhalb der Röstkammer und zum Schließen des Bodendeckels bei einer Stellung des Bodendeckels unterhalb der Röstkammer.

6. Haushaltskaffeeröster (R) nach Anspruch 6 oder 7, **dadurch gekennzeichnet, dass** der Bodendeckel (20) durch Aufsetzen auf ein Entleerungsbehältnis (4, 30) oder auf eine Mühle (7) verstellbar ausgestaltet ist, zum Öffnen und Herausfallenlassen von Bohnen aus der Röstkammer (1).

7. Haushaltskaffeeröster (R) nach einem der Ansprüche 1 bis 6, **dadurch gekennzeichnet, dass** die Röstkammer (1) eine Röstkammerwandung aufweist, welche einen teilkreisförmigen Schnitt aufweist und längs einer teilkreisförmigen Bahn seitlich und/oder hinter einen Röstzylinder (24) verstellbar ist zum Freigeben eines Innenraums der Röstkammer (1) zum Einsetzen und Entnehmen des Röstzylinders (24).

8. Haushaltskaffeeröster (R) nach einem vorstehenden Anspruch, **gekennzeichnet durch** einen verschwenkbar angeordneten Deckel (2°) an einem Wasserspeicher (2) und/oder einer Röstkammer (1) zum Einfüllen von Wasser bzw. Bohnen.

9. Haushaltskaffeeröster (R) nach einem vorstehenden Anspruch, **gekennzeichnet durch** einen seitlich verschiebbar angeordneten Deckel (2°) an einem Wasserspeicher (2) und/oder einer Röstkammer (1) zum Einfüllen von Wasser bzw. Bohnen.

10. Haushaltskaffeeröster (R) nach einem vorstehenden Anspruch, **dadurch gekennzeichnet, dass** oberseitig der Röstkammer (1) ein Deckel (34) angeordnet ist, welcher zum Einsetzen und/oder Entnehmen eines Röstzylinders (24) entfernbar, insbesondere abnehmbar oder verschwenkbar ist.

11. Haushaltskaffeeröster (R) nach einem vorstehenden Anspruch, **gekennzeichnet durch** eine Auffangschale (4; 30), wobei die Auffangschale unterhalb einer Röstkammer zum Aufnehmen von zumindest Spelzen der Bohnen während des Röstvorgangs ausgebildet und angeordnet ist.

12. Haushaltskaffeeröster (R) nach einem vorstehenden Anspruch, **dadurch gekennzeichnet, dass** in einem mittleren Abschnitt eine Röstkammer (1) angeordnet ist, auf einer Seite seitlich davon ein Wasserspeicher (2) angeordnet ist und auf der anderen Seite der Röstkammer (1), dem Wasserspeicher (2) gegenüberliegend, ein Dampfkessel (6*) angeordnet ist.

13. Haushaltskaffeeröster (R) nach einem vorstehenden Anspruch, **dadurch gekennzeichnet, dass** Bedien- und/oder Anzeigeelemente (36) in einem Gehäuseabschnitt ohne Röstkammer (1) und ohne Wasserspeicher (2) angeordnet sind, in welchem ein Dampfkessel (6*) angeordnet ist.

14. Haushaltskaffeeröster (R) nach einem vorstehenden Anspruch, **gekennzeichnet durch** eine Elektronik (10) zum Ansteuern verschiedener Betriebsprogramme zum Rösten und/oder Mahlen von Bohnen.

15. Haushaltskaffeeröster (R) nach einem vorstehenden Anspruch, **gekennzeichnet durch** eine Waage zum Wiegen von in die Röstkammer eingefüllten Bohnen, wobei die Waage einen Gewichtswert an eine Elektronik (10) zum Steuern des Röstbetriebs leitet.

16. Haushaltskaffeeröster (R) nach einem vorstehenden Anspruch, **dadurch gekennzeichnet, dass** die Elektronik (10) ausgelegt und/oder programmiert ist zum Durchführen eines Reinigungsprozesses, bei dem Dampf in einen Röstzylinder (24) und/oder in eine Röstkammer (1) geleitet wird.

17. Haushaltskaffeeröster (R) nach Anspruch 18, **dadurch gekennzeichnet, dass** Wände des Röstzylinder (24) und/oder der Röstkammer (1) derart ausgestaltet, insbesondere außenseitig kühlbar ausgestaltet sind, dass zum Reinigen an den Wänden der Dampf kondensiert und herunterläuft.

18. Haushaltskaffeeröster (R) nach einem vorstehenden Anspruch, **dadurch gekennzeichnet, dass** die Elektronik (10) ausgelegt und/oder programmiert ist zum automatischen Durchführen einer Kühlphase zum Abkühlen der gerösteten Bohnen in einer Röstkammer (1) nach einem Röstvorgang der Bohnen in der Röstkammer (1).

19. Haushaltskaffeeröster (R) nach einem vorstehenden Anspruch, **dadurch gekennzeichnet, dass** eine Röstkammer (1) und/oder ein Röstzylinder (24) durch eine Schaltanordnung und/oder eine Ansteuerung durch eine Elektronik (10) ausgelegt sind, wahlweise von Dampf oder Kühlungsluft durchströmt zu werden.

## Claims

1. Household coffee roaster (R) which is a steam roaster (R) with a roasting chamber (1), **characterised in that** it comprises a housing (17), in which in addition to the roasting chamber (1) a coffee grinder (7) is arranged and/or that the roasting chamber (1) can be removed from a housing (11) and on the underside is designed to be placed on a coffee grinder (7).

2. Household coffee roaster (R) according to claim 1, **characterised in that** it is a fluid bed roaster (R).

3. Household coffee roaster (R) according to claim 2, **characterised in that** it comprises at least:
- a water reservoir (2),
- a steam boiler (6; 6*),
- a drip tray (4; 30) and
- an electronic control system (10).

4. Household coffee roaster (R) according to any preceding claim, wherein a roasting chamber (1) has an adjustable bottom cover (18; 20; 28), which is designed to open into an open state of the bottom cover for the purpose of filling and/or dispensing beans and which is designed to be closable into a closed state of the bottom cover for the purpose of retaining beans in the roasting chamber.

5. Household coffee roaster (R) according to claim 4, **characterised in that** the bottom cover (20) is designed to be gravity-actuated for the purpose of opening the bottom cover at a position with the bottom cover above the roasting chamber and of closing the bottom cover at a position of the bottom cover under the roasting chamber.

6. Household coffee roaster (R) according to claim 6 or 7, **characterised in that** the bottom cover (20) is designed to be movable by being placed on a discharge container (4, 30) or on a grinder (7), for the purpose of opening and allowing beans to fall out of the roasting chamber (1).

7. Household coffee roaster (R) according to one of claims 1 to 6, **characterised in that** the roasting chamber (1) has a roasting chamber wall which has a part-circular section and can be moved along a part-circular path laterally and/or to behind a roasting cylinder (24) for the purpose of exposing an interior space of the roasting chamber (1) for the purpose of inserting and removing the roasting cylinder (24).

8. Household coffee roaster (R) according to any preceding claim, **characterised by** a pivotably arranged cover (2°) on a water reservoir (2) and/or a roasting chamber (1) for the purpose of filling water or beans.

9. Household coffee roaster (R) according to any preceding claim, **characterised by** a laterally movably arranged cover (2°) on a water reservoir (2) and/or a roasting chamber (1) for the purpose of filling water or beans.

10. Household coffee roaster (R) according to any preceding claim, **characterised in that** a cover (34) is arranged on the upper side of the roasting chamber (1), and can be removed, in particular can be detached or pivoted, for the purpose of inserting and/or removing a roasting cylinder (24).

11. Household coffee roaster (R) according to any preceding claim, **characterised by** a drip tray (4; 30), wherein the drip tray is designed and arranged underneath a roasting chamber for the purpose of collecting at least husks of the beans during the roasting process.

12. Household coffee roaster (R) according to any preceding claim, **characterised in that** a roasting chamber (1) is arranged in a central portion, a water reservoir (2) is arranged on one side laterally thereof and a steam boiler (6*) is arranged on the other side of the roasting chamber (1), opposite the water reservoir (2).

13. Household coffee roaster (R) according to any preceding claim, **characterised in that** operating and/or display elements (36) are arranged in a housing section without roasting chamber (1) and without water reservoir (2), in which a steam boiler (6*) is arranged.

14. Household coffee roaster (R) according to any preceding claim, **characterised by** an electronic system (10) for controlling various operating programs for roasting and/or grinding beans.

15. Household coffee roaster (R) according to any preceding claim, **characterised by** a balance for weighing beans filled into the roasting chamber, wherein the balance passes a weight value to an electronic system (10) for the purpose of controlling the roasting process.

16. Household coffee roaster (R) according to any preceding claim, **characterised in that** the electronic system (10) is configured and/or programmed to perform a cleaning process in which steam is fed into a roasting cylinder (24) and/or into a roasting chamber (1).

17. Household coffee roaster (R) according to claim 18, **characterised in that** walls of the roasting cylinder (24) and/or of the roasting chamber (1) are designed in such a way, in particular are designed to be externally coolable, that for the purpose of cleaning the steam condenses on and runs down the walls.

18. Household coffee roaster (R) according to any preceding claim, **characterised in that** the electronic system (10) is configured and/or programmed to automatically perform a cooling stage for cooling the roasted beans in a roasting chamber (1) after the beans have been roasted in the roasting chamber (1).

19. Household coffee roaster (R) according to any preceding claim, **characterised in that** a roasting chamber (1) and/or a roasting cylinder (24) are designed, thanks to a switching arrangement and/or an actuation by an electronic system (10), so that steam or cooling air optionally flows through them.

## Revendications

1. Torréfacteur à café domestique (R) qui est un torréfacteur à vapeur (R) avec une chambre de torréfaction (1), **caractérisé en ce qu'**il comprend un boîtier (17), dans lequel en plus de la chambre de torréfaction (1) est disposé un moulin à café (7) et/ou en ce que la chambre de torréfaction (1) est constituée de manière amovible à partir d'un boîtier (11) et pour être installée par le dessous sur un moulin à café (7).

2. Torréfacteur à café domestique (R) selon la revendication 1, **caractérisé en ce qu'**il est un torréfacteur à lit fluidisé (R).

3. Torréfacteur à café domestique (R) selon la revendication 2, **caractérisé en ce qu'**il comprend au moins :
- un réservoir d'eau (2),
- un générateur de vapeur (6 ; 6*),
- un collecteur (4 ; 30) et
- une électronique de commande (10).

4. Torréfacteur à café domestique (R) selon l'une des revendications précédentes, dans lequel une chambre de torréfaction (1) présente un couvercle inférieur réglable (18 ; 20 ; 28) qui est conçu pour une ouverture dans un état ouvert du couvercle inférieur afin de verser et/ou de distribuer des grains et qui est conçu pour être fermé dans un état fermé du couvercle inférieur afin de conserver des grains dans la chambre de torréfaction.

5. Torréfacteur à café domestique (R) selon la revendication 4, **caractérisé en ce que** le couvercle inférieur (20) est constitué de manière à être actionné par la force de gravité pour l'ouverture du couvercle inférieur dans une position où le couvercle inférieur se situe au-dessus de la chambre de torréfaction et pour la fermeture du couvercle inférieur dans une position du couvercle inférieur en dessous de la chambre de torréfaction.

6. Torréfacteur à café domestique (R) selon la revendication 6 ou 7, **caractérisé en ce que** le couvercle inférieur (20) est conçu de manière réglable pour être posé sur un récipient d'évacuation (4, 30) ou sur un moulin (7) pour s'ouvrir et faire tomber les grains hors de la chambre de torréfaction (1).

7. Torréfacteur à café domestique (R) selon l'une des revendications 1 à 6, **caractérisé en ce que** la chambre de torréfaction (1) présente une paroi de chambre de torréfaction, qui présente une section de forme partiellement circulaire et est réglable latéralement et/ou derrière un cylindre de torréfaction (24) le long d'une bande de forme partiellement circulaire afin de libérer un espace interne de la chambre de torréfaction (1) en vue de l'installation et de l'enlèvement du cylindre de torréfaction (24).

8. Torréfacteur à café domestique (R) selon l'une des revendications précédentes, **caractérisé par** un couvercle (2°) disposé de manière pivotante sur un réservoir d'eau (2) et/ou une chambre de torréfaction (1) pour verser de l'eau ou des grains.

9. Torréfacteur à café domestique (R) selon l'une des revendications précédentes, **caractérisé par** un couvercle (2°) disposé de manière mobile latéralement sur un réservoir d'eau (2) et/ou une chambre de torréfaction (1) pour verser de l'eau ou des grains.

10. Torréfacteur à café domestique (R) selon l'une des revendications précédentes, **caractérisé en ce qu'**en haut de la chambre de torréfaction (1) est disposé un couvercle (34), qui peut être sorti, en particulier retiré ou pivoté, pour l'introduction et/ou l'enlèvement d'un cylindre de torréfaction (24).

11. Torréfacteur à café domestique (R) selon l'une des revendications précédentes, **caractérisé par** un collecteur (4 ; 30), dans lequel le collecteur est constitué et disposé en dessous d'une chambre de torréfaction pour la réception au moins des enveloppes des grains pendant le processus de torréfaction.

12. Torréfacteur à café domestique (R) selon l'une des revendications précédentes, **caractérisé en ce que** dans une section moyenne est disposée une chambre de torréfaction (1), sur un côté latéralement par rapport à celle-ci est disposé un réservoir d'eau (2) et sur l'autre côté de la chambre de torréfaction (1), opposé au réservoir d'eau (2), est disposé un générateur de vapeur (6*).

13. Torréfacteur à café domestique (R) selon l'une des revendications précédentes, **caractérisé en ce que** des éléments de manipulation et/ou d'affichage (36) sont disposés dans une section de boîtier sans chambre de torréfaction (1) et sans réservoir d'eau (2), où est disposé un générateur de vapeur (6*).

14. Torréfacteur à café domestique (R) selon l'une des revendications précédentes, **caractérisé par** une électronique (10) pour le pilotage de différents programmes de fonctionnement afin de torréfier et/ou de moudre des grains.

15. Torréfacteur à café domestique (R) selon l'une des revendications précédentes, **caractérisé par** une balance pour la pesée de grains versés dans la chambre de torréfaction, dans lequel la balance dirige une valeur de poids vers une électronique (10) pour commander la torréfaction.

16. Torréfacteur à café domestique (R) selon l'une des revendications précédentes, **caractérisé en ce que** l'électronique (10) est adaptée et/ou programmée pour l'exécution d'un processus de nettoyage, dans lequel de la vapeur est dirigée dans un cylindre de torréfaction (24) et/ou dans une chambre de torréfaction (1).

17. Torréfacteur à café domestique (R) selon la revendication 18, **caractérisé en ce que** des parois du cylindre de torréfaction (24) et/ou de la chambre de torréfaction (1) sont conçues, en particulier conçues pour pouvoir être refroidies côté extérieur, de telle sorte que pour le nettoyage au niveau des parois la vapeur est condensée et descend.

18. Torréfacteur à café domestique (R) selon l'une des revendications précédentes, **caractérisé en ce que** l'électronique (10) est adaptée et/ou programmée pour l'exécution automatique d'une phase de refroidissement pour refroidir les grains torréfiés dans une chambre de torréfaction (1) à l'issue d'un processus de torréfaction des grains dans la chambre de torréfaction (1).

19. Torréfacteur à café domestique (R) selon l'une des revendications précédentes, **caractérisé en ce qu'**une chambre de torréfaction (1) et/ou un cylindre de torréfaction (24) sont adaptés par un circuit de commande et/ou un pilotage par une électronique (10), pour être traversés au choix par de la vapeur ou de l'air de refroidissement.
